(19) Europäisches Patentamt
European Patent Office
Office européen des brevets

(11) **EP 2 689 535 B1**

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(21) Anmeldenummer: **12727316.7**

(22) Anmeldetag: **10.05.2012**

(51) Int Cl.:
***H04B 1/7075*** *(2011.01)*   ***H04J 13/18*** *(2011.01)*
***H04J 13/00*** *(2011.01)*

(86) Internationale Anmeldenummer:
**PCT/EP2012/058637**

(87) Internationale Veröffentlichungsnummer:
**WO 2012/163647 (06.12.2012 Gazette 2012/49)**

(54) **VERFAHREN UND DECODIERER ZUM ENTSPREIZEN VON DATENSIGNALEN, DIE MIT WALSH-SEQUENZEN GESPREIZT SIND**

METHOD AND DECODER FOR DEPSPREADING OF DATA SIGNALS WHICH ARE SPREAD WITH WALSH SEQUENCES

MÉTHODE ER DÉCODEUR POUR DÉSÉTALER DES SIGNAUX DE DONNÉES ÉTALÉS PAR DES SÉQUENCES DE WALSH

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.05.2011 DE 102011075650**

(43) Veröffentlichungstag der Anmeldung:
**29.01.2014 Patentblatt 2014/05**

(73) Patentinhaber: **Rudershausen, Reinhart**
**86938 Schondorf am Ammersee (DE)**

(72) Erfinder: **Rudershausen, Reinhart**
**86938 Schondorf am Ammersee (DE)**

(74) Vertreter: **Lang, Johannes**
**Bardehle Pagenberg Partnerschaft mbB**
**Patentanwälte, Rechtsanwälte**
**Prinzregentenplatz 7**
**81675 München (DE)**

(56) Entgegenhaltungen:
**WO-A1-2010/108823**

- **DARNELL M ET AL: "Synthesis of multilevel complementary sequences", ELECTRONICS LETTERS, IEE STEVENAGE, GB, Nr. 19, 15. September 1988 (1988-09-15), Seiten 1251-1252, XP002333982, ISSN: 0013-5194**

**Beschreibung**

Die Erfindung betrifft ein Verfahren und einen Decodierer zum Entspreizen eines Datensignals, welches mittels Walsh-Sequenz gespreizt ist.

Bei Datenübertragungssystemen, welche ein Codemultiplexverfahren verwenden, wie z.B. CDMA, UMTS, GPS, RFID, WLAN und WIMAX, können mehrere Teilnehmer auf einem Nachrichtenübertragungs-Kanal gleichzeitig Daten übertragen. Damit es dennoch nicht zu Kollisionen kommt, spreizt der Sender die Datensignale der einzelnen Teilnehmer mit jeweils unterschiedlichen Spreizsequenzen (d.h. codiert sie mit einem Spreizcode, bzw. einer Codesequenz), die eine eindeutige Zuordnung der Signale in einem Empfänger ermöglichen. Durch diese Spreizung der einzelnen Datensignale kann die gesamte zur Verfügung stehende Systembandbreite genutzt werden, d.h., die genutzte Bandbreite jedes einzelnen Teilnehmers wird im Frequenzbereich vervielfacht. In praktischen Systemen werden Spreizfaktoren zwischen etwa 10 und 1000 eingesetzt.

Ein Vorteil dieses Verfahrens ist die geringe Anfälligkeit gegenüber Effekten der Mehrwegeausbreitung. Aufgrund der hohen Sendebandbreite wird immer nur ein kleiner Teil des belegten Spektrums von frequenzselektivem Rayleigh-Fading beeinflusst, so dass die typischen Signaleinbrüche wesentlich schwächer sind als bei Schmalbandsystemen. Ein weiterer Vorteil ist die Verringerung der spektralen Leistungsdichte durch den Spreizvorgang. Somit ist eine Kommunikation sogar noch unterhalb der Rauschschwelle möglich. Weitere Vorteile sind die geringe Beeinflussung durch Störsignale unterschiedlicher Ursachen (Anti-Jamming), einschließlich der Gleichkanalinterferenz (Anti-Interference) durch andere Teilnehmer, und die Wirkung der Spreizsequenz als Verschlüsselung, da die Nachricht im Empfänger nur dann detektiert werden kann, wenn der Spreizcode bekannt ist.

Bei der Spreizung wird das zu übertragende binäre Datensignal mit einer Spreizsequenz, z.B. einer zufälligen, rauschähnlichen Codesequenz (englisch pseudo noise = PN-Sequenz), über einen größeren Spektralbereich verteilt. Nach der Modulation auf ein hochfrequentes Trägersignal wird das nunmehr gespreizte Datensignal übermittelt, z.B. über die Antenne abgestrahlt. Der Empfänger demoduliert das gespreizte Datensignal und führt darauf eine Entspreizung mit einem zum Sender synchronisierten Spreizsignal durch.

Der Empfänger empfängt nicht nur das gespreizte Datensignal des gewünschten Teilnehmers, sondern auch gespreizte Datensignale von anderen Teilnehmern, die im gleichen Frequenzbereich senden. Durch den Entspreizvorgang im Empfänger wird allerdings nur jenes Datensignal in der Bandbreite verringert, welches die gleichen und synchronen Spreizsequenzen wie der Sender verwendet. Nach dem Entspreizen kann das gewünschte Datensignal leicht mittels eines signalangepassten Filters ("Matched Filter", siehe J. G. Proakis, M. Salehi, Grundlagen der Kommunikationstechnik, Pearson Studium, München, 2004, S. 793 - 797) herausgefiltert werden.

Der Filter für Spreizsequenzen lässt sich mit der Autokorrelationsfunktion (AKF) und der Kreuzkorrelationsfunktion (KKF) beschreiben. Die Autokorrelationsfunktion AKF kann für diskrete Funktionen durch eine Autokorrelationssumme ($AKF_k$) gebildet werden und gibt die statistische Bindung der Elemente einer Sequenz $X_i(k)$ mit N Elementen an:

$$AKF_k = {}_{i=0}\Sigma^{N-1-k}\, X_i\, X_{i+k} \qquad\qquad \text{Gleichung (1)}$$

wobei der Index k die relative Laufzeitverschiebung bei der Übertragung der Spreizsequenzen (Verschiebung in Anzahl von Subpulsen $\tau$ bei der Berechnung der Korrelation; $0 \leq k \leq N-1$) zueinander beschreibt; bei idealen Bedingungen ohne Störungen und bei absolut synchronem Empfang ergibt sich nur bei k = 0 ein Wert ungleich Null der Autokorrelation, welcher dann gerade dem Datensignal entspricht. Andere Werte, sogenannte Nebenmaxima, treten dann bei der Entspreizung nicht auf.

Es existieren Spreizsequenzen, deren periodische AKF fast ideal sind, z.B. die M-Sequenzen und Goldfolgen. Unter einer periodischen AKF wird die Korrelationsfunktion AKF verstanden, die sich ergibt, wenn die gespreizten Datensignale periodisch unmittelbar aufeinanderfolgend empfangen werden.

Es sind jedoch nicht nur die periodischen Autokorrelationseigenschaften einer Spreizsequenz für die Spreiztechnik relevant, sondern auch bei asynchronem Empfang d.h. wenn eine unbekannte, relative zeitliche Verschiebung der Spreizsequenzen zueinander besteht. Für Anwendungen in Codemultiplexverfahren sind auch besonders die aperiodischen Autokorrelationseigenschaften für asynchronen Empfang und die Kreuzkorrelationseigenschaften von großem Interesse. Die Interferenz zwischen zwei verschiedenen gespreizten Datensignalen ist proportional zum Skalarprodukt P

$$P = \sum_{i=0}^{i=N-1} XiYi \qquad\qquad \text{Gleichung (2)}$$

der beiden Spreizsequenzen Xi, Yi. Demnach sollten Spreizsequenzen mindestens orthogonal sein, was bedeutet, dass ihr Skalarprodukt P Null ist.

Jedoch reicht allein die Orthogonalität nicht aus für Anwendungen, bei denen die Spreizsequenzen nicht synchron gesendet werden oder wenn große Signalverzögerungen durch Mehrwegeausbreitung entstehen können. In diesen Fällen muss auch das Skalarprodukt verschoben um die Verzögerung $\tau$, d.h. die Kreuzkorrelationsfunktion (KKF), minimiert werden.

Aus D.E. Sarwate, M.B. Pursley, Crosscorrelation Properties of Pseudorandom Sequences and Related Sequences, Proc. of the IEEE, vol. 68, no. 5, May 1980, pp. 593 - 619 sind Definitionen für periodische und aperiodische Korrelationsfunktionen bekannt.

Die KKF ist damit ein Maß für die Eignung verschiedener Sequenzen $X_i(k)$ und $Y_j(k)$ in Codemultiplexsystemen und kann für diskrete Funktionen über die Kreuzkorrelationssumme ($KKF_k$) gebildet werden:

$$KKF_k = {}_{i=0}\Sigma^{N-1-k} X_i Y_{i+k} . \hspace{4cm} \text{Gleichung (3)}$$

Je niedriger die Kreuzkorrelationswerte der Spreizsequenzen verschiedener Teilnehmersignale sind, desto geringer sind die Störungen und desto mehr Teilnehmer können am Codemultiplex teilhaben.

In Systemen, welche Codemultiplexverfahren einsetzen, z.B. beim CDMA Vielfachzugriffssystem, wird durch hohe Werte der Kreuzkorrelation der Signal-Rauschabstand vor dem Decodierer verringert, was wiederum die maximale Teilnehmeranzahl begrenzt. Sind zusätzlich die gespreizten Datensignale der Teilnehmer unterschiedlich stark, können die nicht idealen Auto-/Kreuz-Korrelationseigenschaften einer Spreizsequenz dazu führen, dass im Empfänger das eigentlich gesuchte gespreizte Datensignal trotz richtiger Spreizsequenz von den anderen gespreizten Datensignalen zugedeckt wird und daher nicht erkannt wird (Near-Far Effekt).

DE 197 17 546 A1 offenbart ein Verfahren und eine Vorrichtung zur Decodierung bzw. zum Demodulieren des Empfangssignals in einem CDMA Übertragungssystem, welches in serieller Codeverkettung vorliegt. Dabei wird eine zweistufige Codierung auf der Senderseite des Übertragungssystems, bestehend aus äußerer und innerer Codierung, angewendet. Die innere Codierung ist eine orthogonale mehrstufige Modulation mit Walsh-Funktionen, wohingegen es sich bei der äußeren Codierung um einen fehlerkorrigierenden Code handelt.

Ein Nachteil eines solchen Systems, welches bei der Übertragung von gespreizten Datensignalen eingesetzt wird, besteht darin, dass hier zur Fehlerkorrektur der Übertragung ein zweites Signal übertragen werden muss. Dies reduziert die zur Verfügung stehende Nutzbandbreite und ist rechnerisch sehr aufwändig.

EP 1 311 095 B1 offenbart die Verwendung von Paaren von Golay-Sequenzen zur Spreizmodulation. In dem beschriebenen Verfahren werden binäre Eingabedaten mittels $\eta$ Paaren komplementärer Golay-Sequenzen der Spreizcodierung unterzogen und diese Paare über eine Vorrichtung zur digitalen Kommunikation übermittelt. Beim Empfangen werden die so entstandenen Sequenzen mit den $\eta$ Paaren komplementärer Golay-Sequenzen mittels Korrelation gefaltet, wobei die Resultate der Faltung entsprechend den gleichen Paaren von komplementären Golay-Sequenzen summiert werden, um $\eta$ Datenströme zu erhalten.

EP 1 726 114 B1 offenbart ebenfalls die Verwendung von Paaren von Golay-Sequenzen zur Spreizmodulation. Allerdings muss hier nur eine Golay-Sequenz eines Paares übertragen werden, da die jeweilige Komplementärsequenz erst empfängerseitig erzeugt wird.

Golay-Sequenzen sind Sequenzpaare, welche die nützliche Eigenschaft haben, dass ihre phasenverschobenen aperiodischen Autokorrelationskoeffizienten sich zu null aufaddieren. So werden störende Nebenmaxima in der Autokorrelationsfunktion vermieden.

Ein Nachteil der Spreizmodulation mit reinen Golay-Sequenzen besteht darin, dass nur wenige Exemplare einer Sequenzlänge existieren. Somit ist eine Multiplexübertragung vieler gespreizter Datensignale durch die geringe Größe der Sequenzfamilie begrenzt, welche zur Spreizcodierung benötigt wird. Des Weiteren sind diese zwar orthogonal zueinander, haben also eine Nullstelle bei Verschiebung $\tau = 0$; bei Verschiebungen $\tau > 0$ zeigt die Kreuzkorrelation zwischen den verschiedenen Golay-Sequenzen jedoch störende Nebenmaxima.

Um diese Beschränkung zu überwinden, offenbart EP 1 726 114 B1 den zusätzlichen Übergang zu komplexwertigen Sequenzen unter Verwendung von DPSK (differential phase shift keying).

Dies ist aber sehr aufwendig, da sowohl ein zweites, völlig unterschiedliches Modulationssystems mit zusätzlichen Verfahrensschritten als auch zusätzliche Hardwarekomponenten benötigt werden.

WO 2010/108823 offenbart ein Verfahren und einen Decodierer, welche es ermöglichen, mit Walsh-Sequenzen gespreizte Datensignale, welche mit vielen anderen gespreizten Datensignalen auf der vorhandenen Bandbreite einer Datenverbindung übertragen werden, mit geringem technischen Aufwand zu decodieren, wobei störendes Nebensprechen oder sonstige Beeinträchtigungen der einzelnen Datensignale durch die anderen Datensignale gering sind.

Bei periodischer Anwendung des Verfahrens nach Fig. 10 der WO 2010/108823, das den idealen Dirac-Impuls liefert, treten aber trotzdem noch suboptimale Effekte auf, falls asynchrone Gleichkanalsignale oder Fremdsignale überlagert werden. So entsteht z.B. bei kontinuierlicher, periodischer Übertragung aus der Walsh-Sequenz W(3,2) alleine durch eine zeitliche Verschiebung um zwei Chips die Walsh-Sequenz W(3,3).

| 1 | 1 | 1 | 1 | -1 | -1 | -1 | -1 | 1 | 1 | 1 | 1 | -1 | -1 | -1 | -1 | W(3,2) |
| 1 | 1 | -1 | -1 | -1 | -1 | 1 | 1 | 1 | 1 | -1 | -1 | -1 | -1 | 1 | 1 | W(3,3) |

Bei Übertragungssystemen ohne Synchronisation (wie z.B. beim UMTS Uplink) führt das zu Störungen beim Trennen von fremden Teilnehmersignalen.

Die Aufgabe der vorliegenden Erfindung ist es, ein weiter verbessertes Verfahren zum Entspreizen von Daten anzugeben, die mit Walsh-Sequenzen gespreizt sind, sowie einen entsprechenden Decodierer.

Diese Aufgabe wird von der Erfindung gelöst, die in den Ansprüchen 1 und 4 definiert ist. Vorteilhafte Ausgestaltungen werden in den abhängigen Ansprüchen definiert.

Gemäß der Erfindung wird ein Datenstrom aus kontinuierlich, periodisch übertragenen gespreizten Datensignalen mit jeweils N Elementen (Chips) in zwei Datenströme mit jeweils N Chips aufgespalten, die gegeneinander um N Chips versetzt sind; für jeden dieser Datenströme werden zu jedem Chiptakt der empfangenen Datensignale aperiodische Korrelationsfunktionen berechnet und in Bezug ihrer Maxima bewertet, um Nutzsignale von Fremdsignalen und von Störsignalen zu unterscheiden. Die empfangenen gespreizten Datensignale können mit geringem technischem Aufwand decodiert werden und störendes Nebensprechen oder sonstige Beeinträchtigungen der einzelnen Datensignale durch andere, insbesondere asynchron eintreffende Datensignale anderer Teilnehmer werden eliminiert.

Das erfindungsgemäße Verfahren kann als Software- oder Hardware-Zusatzmodul einfach in vorhandene Übertragungssysteme integriert werden.

Das erfindungsgemäße Verfahren nutzt die verbesserten Korrelationseigenschaften und Verfahren, die aus WO 2010/108823 bekannt sind. Die Korrelationseigenschaften der übertragenen gespreizten Datensignale werden bis zum Optimum verbessert. Sowohl die Summe der Auto- als auch der Kreuzkorrelationsfunktionen der gespreizten Datensignale weisen keine Nebenmaxima mehr auf.

Manche der bisher als Signatursequenzen in Codemultiplexsystemen verwendeten Walsh-Sequenzen weisen schlechte aperiodische AKF und hohe Werte der KKF auf, außerdem geht ihre Orthogonalität schon bei kleinen Synchronisationsfehlern oder Fehlern durch Signalverzerrung oder Mehrwegeausbreitung verloren. Diesen Nachteil behebt die vorliegende Erfindung.

Bei asynchronem Empfang, d.h. wenn eine unbekannte, relative zeitliche Verschiebung der Spreizsequenzen zueinander besteht, wird mit dem erfindungsgemäßen Verfahren das gespreizte Datensignal wesentlich besser aus dem Rauschen erkannt und es kann besser aus Störsignalen oder Gleichkanalinterferenzen herausgefiltert werden. Das neue Verfahren kann daher nicht nur im Downlink sondern auch im Uplink eines Mobilfunksystems, z.B. bei UMTS, das bereits Walsh- und OVFS-Sequenzen verwendet, als vorteilhafte Verbesserung empfängerseitig ergänzt werden und die praktisch erreichbare Teilnehmerzahl pro Zelle in Richtung der theoretischen, vollen Systemladung - also bei N Spreizsequenzen gleichzeitig $N\tau$ Teilnehmer - erhöhen.

In digitalen Kommunikationssystemen mit synchronem Empfang ist das Erhöhen der Teilnehmerzahl und/oder ein Vergrößern der Reichweite bzw. Verringern der Sendeleistung ebenfalls möglich.

Auch der bei den bisher verwendeten Spreizverfahren übliche Übergang zu komplexwertigen Sequenzen mit dem zugehörigen Zusatzaufwand kann vermieden werden durch die einfache Ausnutzung interner Eigenschaften der orthogonalen binären Walsh-Spreizsequenzen. Nichtsdestotrotz können, da die Folgen binär bleiben, die bekannten, höherwertigen komplexen Modulationen, wie z.B. ¼-QPSK, 8-Phasenmodulation weiterhin für die bisher üblichen Zwecke genutzt werden, z.B. zur Erhöhung der Datenrate.

Ausführungsbeispiele der Erfindung werden nun anhand von Zeichnungen näher beschrieben.

Figur 1 zeigt ein Flussdiagramm, in welchem ein Verfahren zum Entspreizen eines gespreizten Datensignals gemäß einer ersten Ausführungsform von WO 2010/108823 dargestellt ist.

Figur 2 zeigt schematisch eine erste Realisierung einer Vorrichtung zum Ausführen des Verfahrens der ersten Ausführungsform nach Fig. 1.

Figur 3 zeigt schematisch eine zweite Realisierung einer Vorrichtung zum Ausführen des Verfahrens der ersten Ausführungsform nach Fig. 1.

Figur 4 zeigt eine graphische Darstellung der Summe der Kreuzkorrelationssummen KF AW(3,5)/AW(3,3) und KF AW(3,5)/AW(3,5)', d.h. ohne Addition der Kreuzkorrelationssummen der zeitumgekehrten gespreizten Datensignale gemäß dem Verfahren der ersten Ausführungsform nach Fig. 1.

Figur 5 zeigt eine tabellarische Darstellung der Summe der Autokorrelationssummen KF1 bis KF4 von AW(3,1) und der Kreuzkorrelationssummen KKF1 bis KKF4 zwischen AW(3,1) und jeweils AW(3,3), AW(3,5) und AW(3,7) gemäß dem Verfahren der ersten Ausführungsform nach Fig. 1.

Figur 6 stellt die Korrelationen von Walsh-Sequenzen dritter Ordnung nach Ausführung der Verfahrensschritte der ersten Ausführungsform in einem Diagramm dar.

Figur 7 stellt die Korrelationen von Golay=Walsh-Sequenzen dritter Ordnung nach Ausführung der Verfahrensschritte der ersten Ausführungsform in einem Diagramm dar.

Figur 8 zeigt die Vervielfachung des Verhältnisses von Haupt- zu Nebenmaximum von AKF und KKF gegenüber Walsh-Sequenzen gemäß einer zweiten Ausführungsform des Verfahrens.

Figur 9 zeigt die Vervielfachung des Verhältnisses von Haupt- zu Nebenmaximum von KKF und aperiodischer AKF gegenüber Gold-Sequenzen gemäß der zweiten Ausführungsform des Verfahrens.

Figur 10 zeigt ein Flussdiagramm, in welchem ein Verfahren zum Entspreizen eines gespreizten Datensignals gemäß der zweiten. Ausführungsform dargestellt ist.

Figur 11 zeigt schematisch eine erste Realisierung einer Vorrichtung zum Ausführen des Verfahrens der zweiten Ausführungsform nach Fig. 10.

Figur 12 zeigt schematisch eine zweite Realisierung einer Vorrichtung zum Ausführen des Verfahrens der zweiten Ausführungsform nach Fig. 10.

Figur 13 fasst das Gesamtergebnis des neuen Verfahrens von AKF und KKF für das Beispiel der Walsh-Sequenzen W(3,m) zusammen.

Verhältnissen keine sichere Nutzertrennung zu erreichen. Ungünstig sind auch die Breiten der AKF im Falle des Codes W(3,1) und W(3,8), wodurch bei frequenzselektiven Kanälen keine Unterdrückung benachbarter Kanalechos möglich ist. Auch bei Walsh-Sequenzen höherer Ordnung mit Sequenzlänge 32 oder höher sind die AKF- und KKF-Werte ähnlich unbefriedigend.

Unter frequenzselektiven Bedingungen können die Walsh-Funktionen als alleinige Nutzercodes deshalb im Downlink nicht verwendet werden; man multipliziert die Codemultiplexsignale zusätzlich mit einem PN-Code, um das Pfadübersprechen zu unterdrücken. Damit wird bei zunehmender Mehrnutzerinterferenzen die allmähliche Qualitätsminderung (graceful degradation) nur als Rauschen wahrgenommen; sie ist damit nicht mehr als Nebensprechen erkennbar.

Im Decodierer verwendet die vorliegende Erfindung beim Entspreizen als Spreizsequenzen S auch gespeicherte Golay-Walsh-Sequenzen nach WO 2010/108823. Golay-Walsh-Sequenzen entstehen durch Multiplikation einer Golay-Sequenz mit einer Walsh-Funktion. Diese Spreizsequenzen werden im Folgenden als AW(n,m) analog der Walsh-Funktionen W(n,m) bezeichnet.

Zur Veranschaulichung der Bildung der Golay-Walsh-Sequenzen wird folgendes Paar komplementärer Golay-Sequenzen der Länge 8 verwendet, d.h. mit acht Chips:

$$A = ( 1, 1, 1, -1, -1, -1, 1, -1)$$

$$A' = (1, 1, 1, -1, 1, 1, -1, 1)$$

$t = 12345678$

In dem Zeitdiagramm bezeichnet t die Zeitpunkte, zu denen der jeweilige Chip in einem Decodierer ankommt.

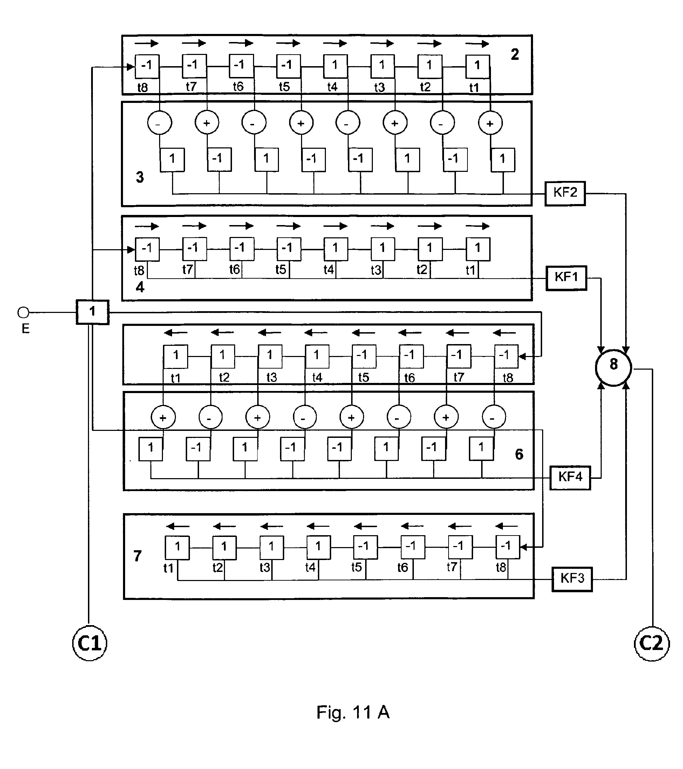

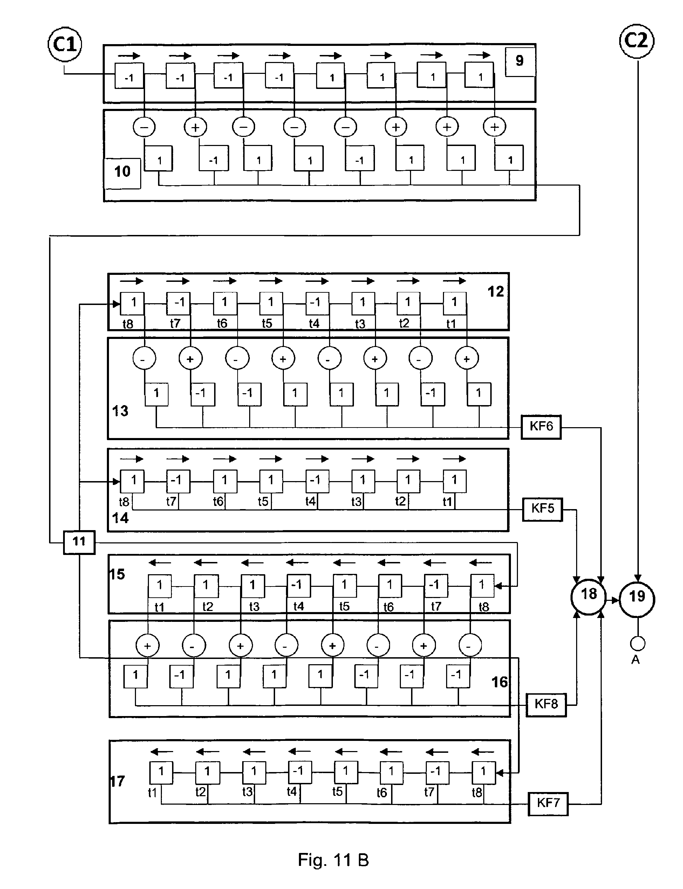

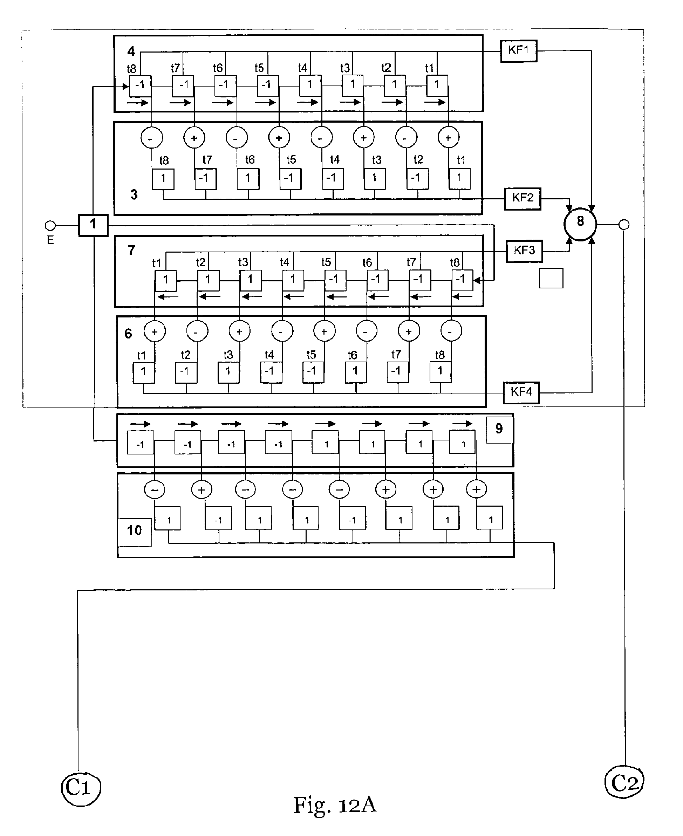

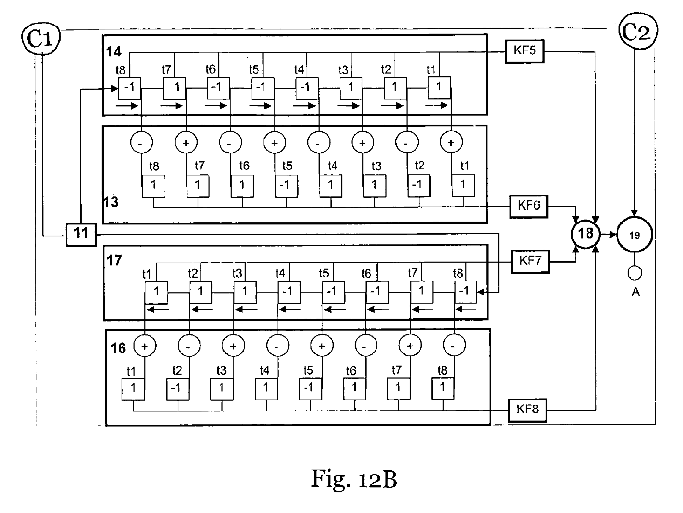

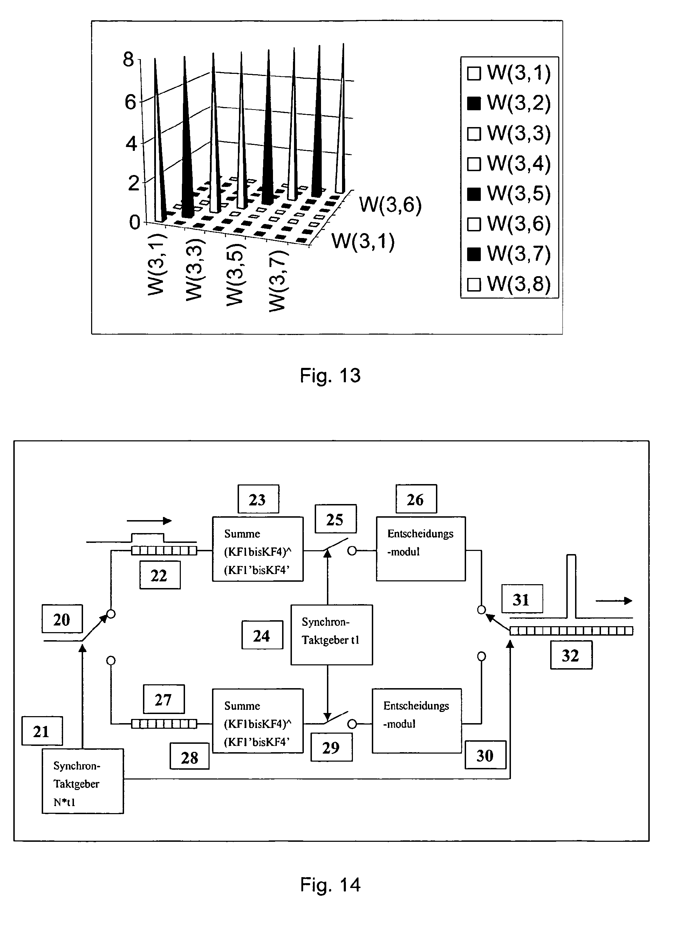

Figur 14 zeigt schematisch einen erfindungsgemäßen Decodierer zum Entspreizen von mittels Walsh-Sequenzen gespreizten Signalen, in dem Vorrichtungen nach Figur 11 oder 12 eingesetzt werden.

Die vorliegende Erfindung verwendet entsprechend WO 2010/108823 für die Spreizung der übertragenen Datensignale als Spreizsequenzen S nur Walsh-Funktionen.

Die Walsh-Funktionen werden im Folgenden mit W(n,m) bezeichnet, wobei n die Ordnung der benutzten Walsh-Funktionenfamilie bezeichnet ($2^n$ = N ist die Anzahl der Chips, d.h. der im gespreizten Datensignal übertragenen Binärelemente); m bezeichnet die jeweilige Walsh-Funktion aus den $2^n$ = N existierenden Walsh-Funktionen ($1 \leq m \leq 2^n$). Die Walsh-Funktionen werden zur Spreizung sowohl als Signatursequenzen zum Trennen von Nutzerkanälen als auch zur höherstufigen orthogonalen Modulation verwendet. Die höherstufige orthogonale Modulation bietet den Vorteil einer um den Faktor n erhöhten Nutzbitrate sowie geringerer Bitfehlerwahrscheinlichkeit.

Da Walsh-Sequenzen streng orthogonal sind, können im Beispiel der Walsh-Funktionenfamilie 3. Ordnung acht Nutzer (23) perfekt separiert werden. Walsh-Sequenzen sind demnach geeignet z.B. für den Downlink eines Mobilsystems, sofern dieser synchron arbeitet und ein nicht frequenzselektiver Kanal vorliegt. Für den Uplink eines Codemultiplexsystems gilt diese Synchronizität jedoch nicht, da die Signale der örtlich verteilten Nutzer die Basisstationen unter verschiedenen Verzögerungszeiten erreichen, so dass - auch unter nichtselektiven Kanälen - die orthogonale Eigenschaft der Walsh-Sequenzen verloren geht.

Die Mehrzahl der Werte der kreuzkorrelierten Paare liegt im Bereich der PN-Sequenzen. Extrem schlecht sind dagegen die Werte der Paare W(3,3) / W(3,6) und W(3,4) / W(3,5). Im letzteren Fall erreicht das Maximum der KKF bereits bei geringer Verschiebung von einem $\tau$ mit N - 1 = 7 fast den Maximalwert der AKF; damit ist unter asynchronen

Die Golay-Sequenz A wird mit den geraden Walsh-Funktionen der Ordnung 3 - W(3,m) - multipliziert, so dass sich die Golay-Walsh-Sequenzen AW(3,m) ergeben. Beispielhaft ist die Bildung der AW(3,1), AW(3,3), AW(3,5) und AW(3,7). Diese sind in der folgenden Tabelle 1 mit zwei Phasenstufen 0° und 180° dargestellt, wobei diese aus acht Subpulsen, welche den Chips entsprechen, bestehen:

| W(3,1) | | 1 | 1 | 1 | 1 | 1 | 1 | 1 | |
| AW(3,1)≡A | | 1 | 1 | 1 | -1 | -1 | -1 | 1 | -1 | |
| W(3,3) | | 1 | 1 | -1 | -1 | -1 | -1 | 1 | 1 | |
| AW(3,3) | | 1 | 1 | -1 | 1 | 1 | 1 | 1 | -1 | |
| W(3,5) | | 1 | -1 | -1 | 1 | 1 | -1 | -1 | 1 | |
| AW(3,5) | | 1 | -1 | -1 | -1 | -1 | 1 | -1 | -1 | |
| W(3,7) | | 1 | -1 | 1 | -1 | -1 | 1 | -1 | 1 | |
| AW(3,7) | | 1 | -1 | 1 | 1 | 1 | -1 | -1 | -1 | |

Tabelle 1

Die Familie der für ein Codemultiplexsystem geeigneten, orthogonalen Walsh- und Golay-Walsh-Sequenzen hat die Größe N, so dass N gespreizte Datensignale in einem Frequenzband übertragen werden können.

Das Dekodieren des empfangenen gespreizten Walsh-Datensignals umfasst nach WO 2010/108823 die zusätzlichen Schritte des Bildens eines gewandelten gespreizten Datensignals durch Multiplikation des gespreizten Walsh-Datensignals mit einer Golay-Sequenz, des Bildens des zeitumgekehrten gewandelten gespreizten Datensignals, des Bildens des komplementären gewandelten gespreizten Datensignals aus dem gespreizten gewandelten Datensignal und des zeitumgekehrten komplementären gewandelten Datensignals aus dem zeitumgekehrten gewandelten Datensignal durch abwechselnde Multiplikation der Chips des zeitumgekehrten gespreizten Datensignals mit +1 und -1, der Korrelation des gewandelten gespreizten Datensignals mit einer Golay-Walsh-Sequenz, des zeitumgekehrten gewandelten gespreizten Datensignals mit der zeitumgekehrten Golay-Walsh-Sequenz, des komplementären gewandelten gespreizten Datensignals mit der komplementären Golay-Walsh-Sequenz und des zeitumgekehrten komplementären gewandelten gespreizten Datensignals mit der zeitumgekehrten komplementären Golay-Walsh-Sequenz, des Summierens dieser vier Korrelationen und des Verknüpfens dieser Summe mit der Summe der vier aus der originalen gespreizten Walsh-Sequenz gebildeten Korrelationen durch Konjunktion.

Nebenmaxima sowohl in der AKF und gleichzeitig in allen KKFs bei Walsh-Sequenzen, welche bei wenigen Verschiebungen $\tau > 0$ noch existierten, werden durch diese Ausführungsform vollständig beseitigt.

Das Verfahren hat daher den Vorteil, dass die Korrelationseigenschaften der übertragenen gespreizten Datensignale bis zum perfekten Optimum verbessert werden. Sowohl die Summen der Auto- als auch die der Kreuzkorrelationsfunktionen der entspreizten Datensignale weisen absolut keine Nebenmaxima auf, als Werte ungleich Null, im Gegensatz zu Anwendungen ohne dieses Verfahren.

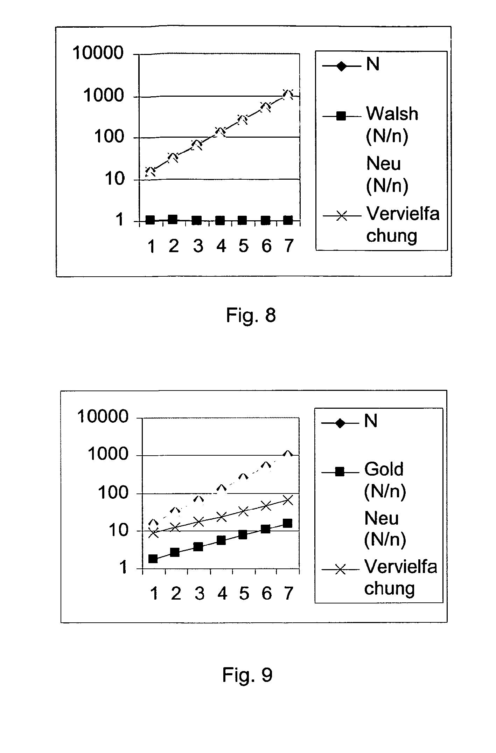

Ohne das Verfahren nach WO 2010/108823 weisen die bisher als Signatursequenzen in Codemultiplexsystemen verwendeten Walsh-Funktionen schlechte aperiodische AKF und hohe Werte der KKF auf, außerdem geht ihre Orthogonalität schon bei kleinen Synchronisationsfehlern oder Fehlern durch Signalverzerrung oder Mehrwegeausbreitung verloren. Die Figuren 8 und 9 zeigen die Verbesserungen durch dieses Verfahren gegenüber bisher verwendeter Walsh-Sequenzen bzw. Gold-Sequenzen:

Figur 8 zeigt die Vervielfachung des Verhältnisses von Haupt- zu Nebenmaximum von AKF und KKF gegenüber Walsh-Sequenzen.

Figur 9 zeigt die Vervielfachung des Verhältnisses von Haupt- zu Nebenmaximum von KKF und aperiodischer AKF gegenüber Gold-Sequenzen.

Dadurch kann das gespreizte Datensignal optimal aus dem Rauschen erkannt und es kann optimal aus Störsignalen oder Gleichkanalinterferenzen herausgefiltert werden.

In einem asynchronen CDMA-System addieren sich zum Nutzwert mit der Amplitude N die N-1 anderen Nutzer leistungsmässig am Eingang der Entscheidungsstufe, Leistungsregelung vorausgesetzt. Damit wird nach dem beschriebenen Verfahren das Nutz- zu Störleistungsverhältnis N2 / (N-1) - N. D.h., mit Sequenzlänge N = 64 erhält man bereits 18 dB - zur bipolaren Übertragung würden bereits 13 dB ausreichen - , bzw. bis zu 30 dB bei Sequenzlänge 1024. Dies sind Werte, wie sie mit bisherigen Sequenzen nicht erreicht werden konnten, siehe Figuren 8 und 9. Bisher war mit Gold-Sequenzen bei asynchronem Betrieb mit N=1024 etwa 3 dB erreichbar. Mit anderen Worten, Synchronizität ist keine notwendige Voraussetzung mehr wie bei bisherigen CDMA-Systemen mit Walsh-Sequenzen und die Teilnehmerzahl wird nicht durch Nebensprechen anderer Teilnehmer reduziert.

Insbesondere treten die vorgenannten Vorteile des beschriebenen Verfahrens in CDMA-Systemen auf. Hier ergibt sich durch die Anwendung des Verfahrens eine schnelle Leistungsregelung, ein vereinfachter Soft-Handover an den Zellengrenzen sowie ein Frequenzwiederverwendungsfaktor N = 1 zwischen Nachbarzellen, d.h. mehr Teilnehmerkapazität durch Verwenden von mehr als einer Frequenz in einer Zelle.

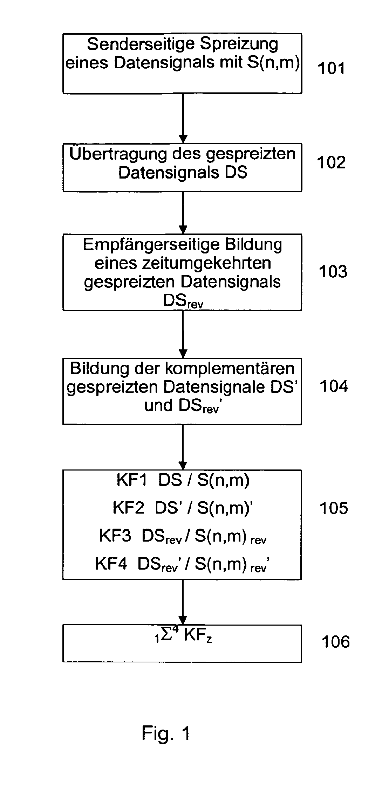

Das Verfahren nach WO 2010/108823 sowie dessen Realisierungen werden im Folgenden anhand der Figuren 1 bis 8 erläutert:

Anhand von Fig. 1 wird nun das Verfahren nach einer ersten Ausführungsform beschrieben. Zunächst wird in Schritt 101 das zu übertragende Datensignal im Sender mit einer Spreizsequenz S gespreizt. Die vorliegende Erfindung verwendet hierzu eine Walsh-Funktion (die in WO 2010/108823 auch beschriebenen Golay-Walsh-Sequenzen werden bei der vorliegenden Erfindung nicht zur senderseitigen Spreizung verwendet).. Bei der Spreizung im Sender wird ein Bit des Datensignals in eine Spreizsequenz S codiert, so dass ein gespreiztes Datensignal DS mit einer der verwendeten Walsh-Spreizsequenz S entsprechenden Anzahl von sog. Chips (Binärsignalen) entsteht.

Dazu wird in einem Codierer für die Übertragung der Datensignale mehrerer Teilnehmer innerhalb eines Frequenzbandes jeweils eine der Spreizsequenzen S mit dem zu übertragenden Datensignal des zugeordneten Teilnehmers multipliziert, d.h. codiert. Da diese gespreizten Datensignale DS orthogonal zueinander sind, können die Datensignale unterschiedlicher Teilnehmer später von dem Empfänger fast störungsfrei wieder rekonstruiert werden.

Daraufhin werden die gespreizten Datensignale DS in einem D/A-Wandler in ein analoges Signal gewandelt und in Schritt 102 übertragen, z.B. über ein Funknetzwerk in einem CDMA-Mobilfunksystem oder über ein Glasfaserkabel in einem Backbone-Netzwerk.

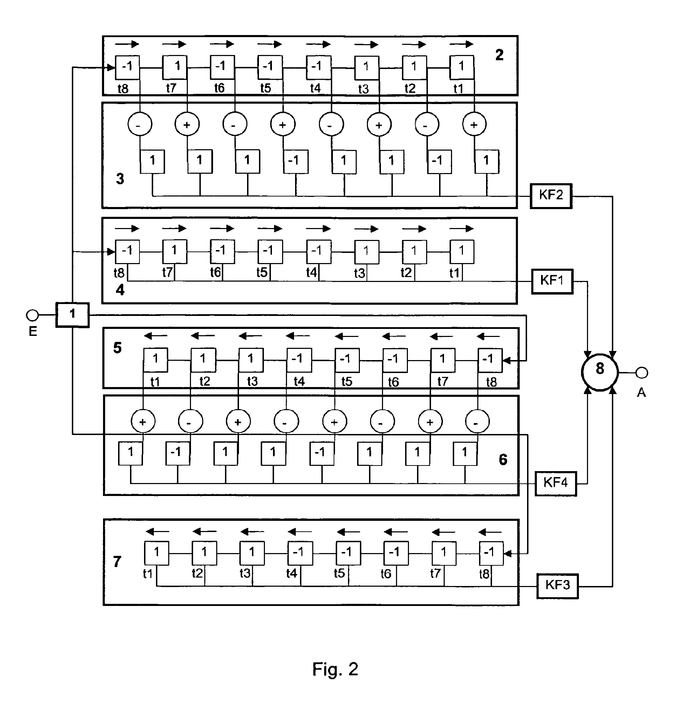

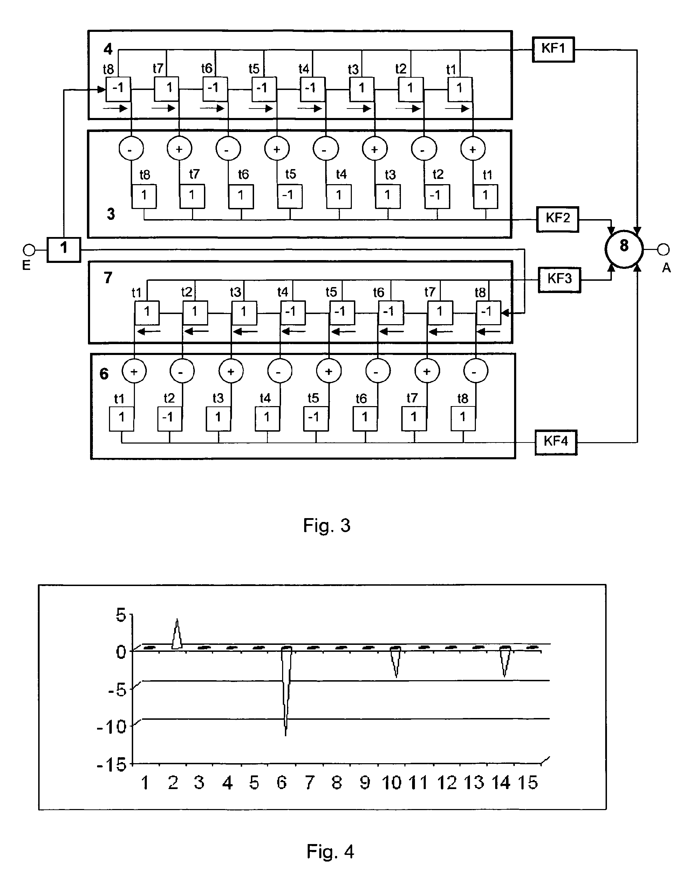

Nach der Übertragung im Schritt 102 wird das gespreizte Datensignal DS gemäß den Schritten 103 bis 106 im Empfänger digitalisiert und decodiert. Dabei kann der später im Einzelnen beschriebene Decodierer zum Entspreizen des gespreizten Datensignals DS eingesetzt werden, von welchem zwei beispielhafte Realisierungen für Spreizsequenzen der Chiplänge 8 in Fig. 2 und 3 dargestellt sind.

Zunächst wird in Schritt 103 aus dem empfangenen, mit einer Walsh-Sequenz gespreizten, Datensignal DS ein zeitumgekehrtes gespreiztes Datensignal $DS_{rev}$ gebildet. Dazu werden die empfangenen Chips des gespreizten Datensignals DS in umgekehrter Reihenfolge gespeichert. Dann werden in Schritt 104 von diesen beiden gespreizten Datensignalen DS, $DS_{rev}$ die jeweiligen bewerteten gespreizten Datensignale DS', $DS_{rev}$' gebildet.

Dies geschieht durch serielle oder parallele alternierende Bewertung des jeweiligen gespreizten Datensignals mit +1 und -1.

Tabelle 2 zeigt diese Bewertung beispielhaft, wenn die Golay-Walsh-Sequenz AW(3,7) empfangen wird.

Die folgende Darstellung für Golay-Walsh-Sequenzen AW (n, m) gilt sinngemäß auch, wenn Walsh-Sequenzen W (n, m) empfangen und im Decodierer entspreizt werden:

Tabelle 2

| AW(3,7) | | 1 | -1 | 1 | 1 | 1 | -1 | -1 | -1 |
|---|---|---|---|---|---|---|---|---|---|
| Alternierende Bewertung | | 1 | -1 | 1 | -1 | 1 | -1 | 1 | -1 |
| AW(3,7)' | | 1 | 1 | 1 | -1 | 1 | 1 | -1 | 1 |

Die Schritte 103 und 104 können auch in umgekehrter Reihenfolge ausgeführt werden.

Die vier gespreizten Datensignale DS, $DS_{rev}$, DS', $DS_{rev}$' werden dann mit der im Empfänger für den betreffenden Teilnehmer gespeicherten Spreizsequenz S bzw. deren Derivaten S', $S_{rev}$, oder $S_{rev}$' korreliert, um das ursprünglich versandte gespreizte Datensignal DS aus der Vielzahl von empfangenen gespreizten Datensignalen anderer Teilnehmer, welche auf das Frequenzband moduliert wurden, herauszufiltern.

Es ist zu beachten, dass das gespreizte Datensignal DS mit den Spreizsequenzen S, das zeitumgekehrte gespreizte Datensignal $DS_{Rev}$ mit den zeitumgekehrten Spreizsequenzen $S_{Rev}$, das bewertete gespreizte Datensignal DS' mit den bewerteten Spreizsequenzen S' und das zeitumgekehrte bewertete Datensignal $DS_{Rev}$' mit den zeitumgekehrten bewerteten Spreizsequenzen $S_{Rev}$' autokorreliert bzw. kreuzkorreliert werden, wobei die schon beschriebenen Auto- bzw. Kreuzkorrelationssummen benutzt werden:

$$ AKF_k = {}_{i=0}\Sigma^{N-k-1} X_i\ X_{i+k} \quad bzw. \quad KKF_k = {}_{i=0}\Sigma^{N-k-1} X_i\ Y_{i+k} \qquad \text{Gleichung (4)} $$

dabei ist N die Anzahl der Chips einer Sequenz, i jeweils ein Chip in der Sequenz und k die Laufzeitverschiebung der Sequenz bei der Berechnung der einzelnen Korrelationsfunktionen $KF_k$ (Verschiebung in Anzahl der Subpulse $\tau$).

Die nachfolgenden Tabellen 3, 4, 5 und 6 zeigen als Beispiel die verschiedenen oben dargestellten Kreuzkorrelationsfunktionen für die Golay-Walsh-Sequenzen AW(3,7) und AW(3,1). Jeweils eine Spalte entspricht der Laufzeit, mit welcher die Signale zueinander angekommen sind. Bei diesem Beispiel wird angenommen, dass in der Vorrichtung zur Berechnung der Korrelationen die Golay-Walsh-Sequenz AW(3,1) und ihre Derivate gespeichert sind.

Tabelle 3

| | | | | | | | | | AW(3,7) | | | | | | | |
|---|---|---|---|---|---|---|---|---|---|---|---|---|---|---|---|---|
| AW(3,1) | 1 | | | | | | | | 1 | -1 | 1 | 1 | 1 | -1 | -1 | -1 |
| | 1 | | | | | | | 1 | -1 | 1 | 1 | 1 | -1 | -1 | -1 | |
| | 1 | | | | | | 1 | -1 | 1 | 1 | 1 | -1 | -1 | -1 | | |
| | -1 | | | | | -1 | 1 | -1 | -1 | -1 | 1 | 1 | 1 | | | |
| | -1 | | | | -1 | 1 | -1 | -1 | -1 | 1 | 1 | 1 | | | | |
| | -1 | | | -1 | 1 | -1 | -1 | -1 | 1 | 1 | 1 | | | | | |
| | 1 | | 1 | -1 | 1 | 1 | 1 | -1 | -1 | -1 | | | | | | |
| | -1 | -1 | 1 | -1 | -1 | -1 | 1 | 1 | 1 | | | | | | | |
| KKF1 | | -1 | 2 | -3 | 0 | -1 | 2 | -3 | 0 | 1 | 6 | 3 | 0 | -3 | -2 | -1 |
| | | $t_1$ | $t_2$ | $t_3$ | $t_4$ | $t_5$ | $t_6$ | $t_7$ | $t_8$ | $t_9$ | $t_{10}$ | $t_{11}$ | $t_{12}$ | $t_{13}$ | $t_{14}$ | $t_{15}$ |

Tabelle 4

| AW(3,1)' | bit | t1 | t2 | t3 | t4 | t5 | t6 | t7 | t8 | t9 | t10 | t11 | t12 | t13 | t14 | t15 |
|---|---|---|---|---|---|---|---|---|---|---|---|---|---|---|---|---|
| | | | | | | | | | AW(3,7)' | | | | | | | |
| | 1 | | | | | | | | 1 | 1 | 1 | -1 | 1 | 1 | -1 | 1 |
| | -1 | | | | | | | -1 | -1 | -1 | -1 | 1 | -1 | -1 | 1 | -1 |
| | 1 | | | | | | 1 | 1 | 1 | -1 | 1 | 1 | -1 | 1 | | |
| | 1 | | | | | 1 | 1 | 1 | -1 | 1 | 1 | -1 | 1 | | | |
| | -1 | | | | -1 | -1 | -1 | 1 | -1 | -1 | 1 | -1 | | | | |
| | 1 | | | 1 | 1 | 1 | -1 | 1 | 1 | -1 | 1 | | | | | |
| | 1 | | 1 | 1 | 1 | -1 | 1 | 1 | -1 | 1 | | | | | | |
| | 1 | 1 | 1 | 1 | -1 | 1 | 1 | -1 | 1 | | | | | | | |
| KKF$_2$ | | 1 | 2 | 3 | 0 | 1 | 2 | 3 | 0 | -1 | 6 | -3 | 0 | 3 | -2 | 1 |
| - | | t1 | t2 | t3 | t4 | t5 | t6 | t7 | t8 | t9 | t10 | t11 | t12 | t13 | t14 | t15 |

Tabelle 5

| AW(3,1)$_{Rev}$ | bit | t1 | t2 | t3 | t4 | t5 | t6 | t7 | t8 | t9 | t10 | t11 | t12 | t13 | t14 | t15 |
|---|---|---|---|---|---|---|---|---|---|---|---|---|---|---|---|---|
| | | | | | | | | | AW(3,7)$_{Rev}$ | | | | | | | |
| | -1 | | | | | | | | 1 | 1 | 1 | -1 | -1 | -1 | 1 | -1 |
| | 1 | | | | | | | -1 | -1 | -1 | 1 | 1 | 1 | -1 | 1 | |
| | -1 | | | | | | 1 | 1 | 1 | -1 | -1 | -1 | 1 | -1 | | |
| | -1 | | | | | 1 | 1 | 1 | -1 | -1 | -1 | 1 | -1 | | | |
| | -1 | | | | 1 | 1 | 1 | -1 | -1 | -1 | 1 | -1 | | | | |
| | 1 | | | -1 | -1 | -1 | 1 | 1 | 1 | -1 | 1 | | | | | |
| | 1 | | -1 | -1 | -1 | 1 | 1 | 1 | -1 | 1 | | | | | | |
| | 1 | -1 | -1 | -1 | 1 | 1 | 1 | -1 | 1 | | | | | | | |
| KKF$_3$ | | -1 | -2 | -3 | 0 | 3 | 6 | 1 | 0 | -3 | 2 | -1 | 0 | -3 | 2 | -1 |
| | | t1 | t2 | t3 | t4 | t5 | t6 | t7 | t8 | t9 | t10 | t11 | t12 | t13 | t14 | t15 |

Tabelle 6

| AW(3,1)$_{Rev}$' | bit | t1 | t2 | t3 | t4 | t5 | t6 | t7 | t8 | t9 | t10 | t11 | t12 | t13 | t14 | t15 |
|---|---|---|---|---|---|---|---|---|---|---|---|---|---|---|---|---|
| | | | | | | | | | AW(3,7)$_{Rev}$' | | | | | | | |
| | -1 | | | | | | | | 1 | -1 | 1 | 1 | -1 | 1 | 1 | 1 |
| | -1 | | | | | | | 1 | -1 | 1 | 1 | -1 | 1 | 1 | 1 | |
| | -1 | | | | | | 1 | -1 | 1 | 1 | -1 | 1 | 1 | 1 | | |
| | 1 | | | | | -1 | 1 | -1 | -1 | 1 | -1 | -1 | -1 | | | |
| | -1 | | | | 1 | -1 | 1 | 1 | -1 | 1 | 1 | 1 | | | | |
| | -1 | | | 1 | -1 | 1 | 1 | -1 | 1 | 1 | 1 | | | | | |
| | 1 | | -1 | 1 | -1 | -1 | 1 | -1 | -1 | -1 | | | | | | |
| | -1 | 1 | -1 | 1 | 1 | -1 | 1 | 1 | 1 | | | | | | | |
| KKF$_4$ | | 1 | -2 | 3 | 0 | -3 | 6 | -1 | 0 | 3 | 2 | 1 | 0 | 3 | 2 | 1 |
| | | t1 | t2 | t3 | t4 | t5 | t6 | t7 | t8 | t9 | t10 | t11 | t12 | t13 | t14 | t15 |

Abschließend wird in Schritt 106 die Summe über die vier Kreuzkorrelationssummen des Beispiels aus den Tabellen 3 bis 6 gebildet (vgl. Tabelle 7):

Tabelle 7

| | | $t_1$ | $t_2$ | $t_3$ | $t_4$ | $t_5$ | $t_6$ | $t_7$ | $t_8$ | $t_9$ | $t_{10}$ | $t_{11}$ | $t_{12}$ | $t_{13}$ | $t_{14}$ | $t_{15}$ |
|---|---|---|---|---|---|---|---|---|---|---|---|---|---|---|---|---|
| $\sum$ **KKF$_1$- KKF$_4$** | | 0 | 0 | 0 | 0 | 0 | 16 | 0 | 0 | 0 | 16 | 0 | 0 | 0 | 0 | 0 |

Trifft in dem Decodierer mit gespeicherten Golay-Walsh-Sequenzen AW(3,1) das gespreizte Datensignal AW(3,3) oder AW(3,5) ein, ergeben die entsprechend den Tabellen 3 bis 7 berechneten Summen der Kreuzkorrelationen überall den Wert null.

Die Summe der Autokorrelationen ergibt sich in entsprechender Weise:

$$\Sigma\ \text{AKF}_1 - \text{AKF}_4 \hspace{5cm} \text{Gleichung (5)}$$

Die Autokorrelationsfunktionen AKF1 werden dabei analog zu den oben dargestellten Kreuzkorrelationen gebildet:

AKF$_1$ =   Korrelation des gespreizten Datensignals DS mit der gespeicherten Spreizsequenz S.

AKF$_2$ =   Korrelation des gespreizten bewerteten Datensignals DS' mit der gespeicherten bewerteten Spreizsequenz S'.

AKF$_3$ =   Korrelation des zeitumgekehrten gespreizten Datensignals DS$_{Rev}$ mit der gespeicherten zeitumgekehrten Spreizsequenz S$_{Rev}$.

AKF$_4$ =   Korrelation des empfangenen zeitumgekehrten bewerteten Datensignal DS$_{Rev}$' mit der gespeicherten zeitumgekehrten bewerteten Spreizsequenz S$_{Rev}$'.

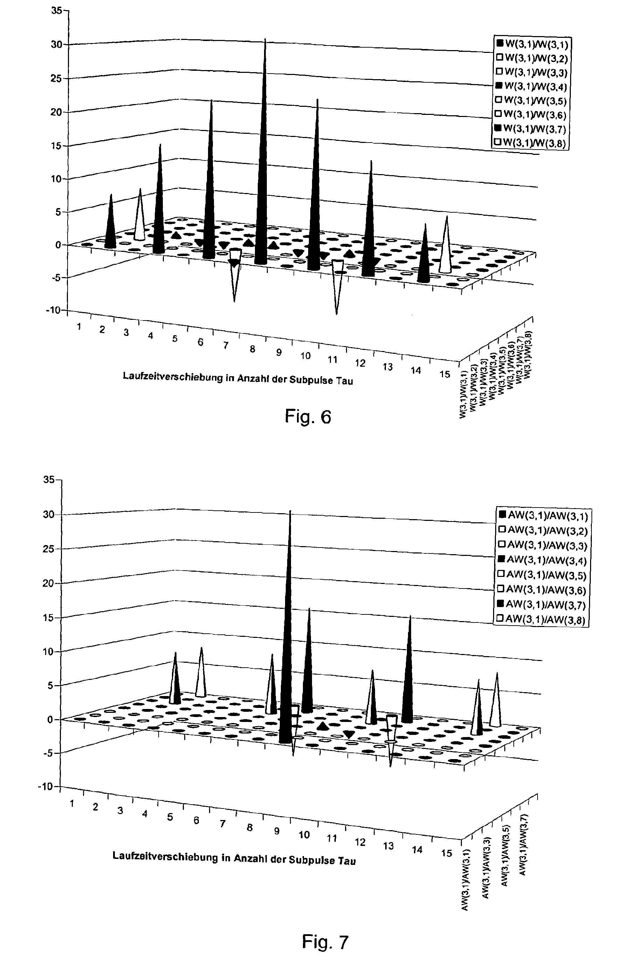

Durch das beschriebene Verfahren werden die AKF- und KKF-Eigenschaften der Walsh-Sequenzen wesentlich verbessert. Das Ergebnis nach Ausführung der unten bezeichneten Verfahrensschritte zeigt folgendes Beispiel der ersten acht Korrelationen in Fig. 6.

Im Gegensatz zu den herkömmlichen KKF der Walsh-Sequenzen verschwinden bei Anwendung des Verfahrens nach WO 2010/108823 die Nebenmaxima zum überwiegenden Teil. Allein drei Korrelationspaare W(3,1) / W(3,3) (siehe Fig.6), W(3,2) / W(3,4) und W(3,5) / W(3,7) von insgesamt 27 Möglichkeiten der Kreuzkorrelation zeigen kleine Nebenmaxima. Auch weisen vier der sieben KKF gar keine Werte ungleich null auf.

Selbst die Autokorrelationssummen AKF, die bei den originalen Walsh-Sequenzen dreiecksförmig breit und damit ungeeignet zur Synchronisation sind, sind verbessert und enthalten neben der Nutzsignalspitze jeweils ein vorteilhaftes Minimum, das hilft, geringe Zeitverschiebungen auszuregeln.

So befindet sich nun auf jeder Seite des Hauptmaximums der AKF ein Minimum mit einer Nullstelle bzw. sogar -1, so dass eine Laufzeitverschiebung von $\tau$ selbst bei Beeinträchtigung des Hauptmaximums ausgeglichen werden kann.

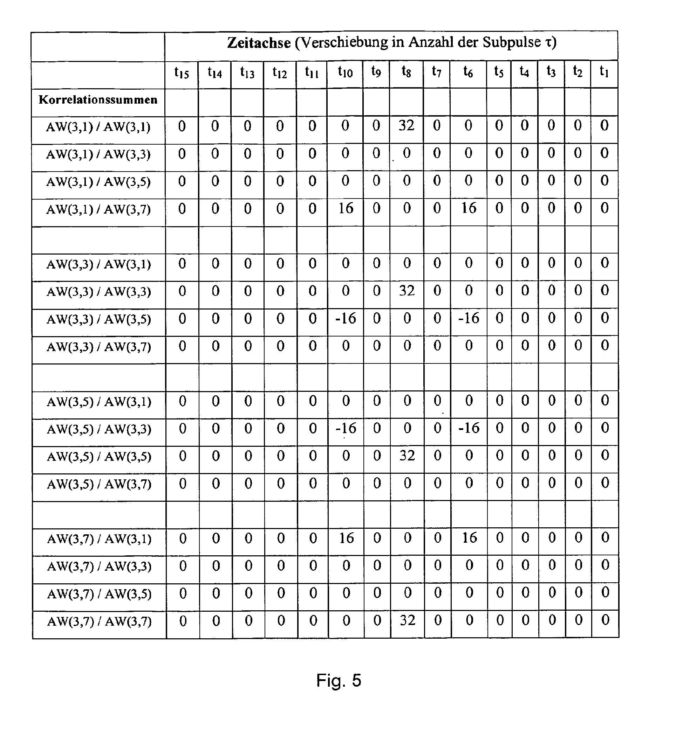

Erfolgt die Entspreizung mit Golay-Walsh-Sequenzen AW(n,m), die man im Empfänger aus der Multiplikation einer empfangenen Walsh-Sequenz mit der Golay-Walsh-Sequenz AW(n,1) gewinnen kann, so werden mit dem beschriebenen Verfahren auch deren AKF- und KKF-Eigenschaften wesentlich verbessert: Diese haben folgende, innere Symmetrieeigenschaft, die im Empfangsfilter des Decodierers zur idealen Impulskompression mit geringen Nebenmaxima ausgenutzt wird: bei der obigen Addition werden für die Summe der AKF alle Nebenmaxima-Werte zu null wie aus der Tabelle in Fig. 5 ersichtlich und graphisch in Fig. 7 dargestellt. Dies ist ein großer Vorteil verglichen mit der AKF für eine Übertragung des Datensignals ohne das beschriebene Verfahren.

Des Weiteren haben die KKF zwischen den mit dem beschriebenen Spreizmodulationsverfahren gespreizten Datensignalen höchstens vier, im Vergleich zur AKF sehr kleine Werte, welche im Falle der beispielhaft angegebenen Werte für die Golay-Walsh-Sequenz mit acht Chips auch nur für jeweils drei der sieben weiteren benutzten Golay-Walsh-Sequenzen existieren, im Falle der AW(3,1) für AW(3,6), AW(3,7) und AW(3,8), wie in Fig. 5 und Fig.7 ersichtlich wird.

Fig. 5 wird im Folgenden näher erläutert. Die vier Zeilen der ersten Gruppe betreffen den Fall, dass im beschriebenen Decodierer die Golay-Walsh-Sequenz AW(3,1) und ihre Derivate gespeichert sind. Kommt in diesem Decodierer ein gespreiztes Datensignal AW(3,1) an, so ergibt die Korrelation (erste Zeile der ersten Gruppe in Fig. 5) nur einen einzigen Ausgangsimpuls der Amplitude 32 in der Spalte $t_8$, in der die beiden Sequenzen keine gegenseitige Verschiebung aufweisen ($\tau$ = 8 oder Index k = 0). Das entspricht dem Fall der Autokorrelation.

Kommt dagegen im Decodierer mit der gespeicherten Sequenz AW(3,1) eine gespreizte Sequenz AW(3,3) an, so ergibt die Korrelation dieser beiden Sequenzen überall null, entsprechend der zweiten Zeile der ersten Gruppe von Tabelleneinträgen.

Kommt ein gespreiztes Signal AW(3,5) an, so ergibt sich wie im zweiten Fall auch in der dritten Zeile überall der Wert null.

Kommt ein gespreiztes Datensignal AW(3,7) an, so ergibt sich entsprechend der vierten Zeile in den Spalten $t_6$ und $t_{10}$ ein Ausgangswert von 16. Dieser Korrelationswert zwischen den gespreizten Signalen AW (3,1) und AW(3,7) ist jedoch so weit vom Wert 32 der Autokorrelation des Signals AW(3,1) mit sich selbst entfernt, so dass eine eindeutige Erkennung des gewünschten Signals AW(3,1) gewährleistet ist.

Die drei Gruppen in Fig. 5 betreffen die Fälle, wenn der Decodierer die Sequenzen AW(3,3), bzw. AW(3,5) bzw. AW(3,7) und deren Derivate gespeichert hat. In allen Fällen besteht ein großer Abstand zwischen dem jeweiligen Nutzsignal mit dem Wert 32 und den Störsignalen mit dem Wert +/-16

Würde das beschriebene Verfahren ohne den Schritt der Zeitumkehr 103 und die Summierung der so berechneten Korrelationswerte ausgeführt werden, so würden mehr Werte der KKF ungleich null und ihre Beträge wären größer. Als Beispiel hierfür zeigt Fig. 4 das Ergebnis der direkten KKF ohne Zeitumkehr zwischen den Golay-Walsh-Sequenzen AW(3,5) und AW (3,3). Wie ersichtlich, treten dort vier große Störspitzen auf, die zu Störungen beim Decodieren führen würden.

Natürlich könnten einige oder alle der hier beschriebenen und weitere eventuell eingefügte Verfahrensschritte auch im Frequenzbereich ausgeführt werden.

Zur empfängerseitigen Umsetzung des Verfahrens wird im Folgenden ein Decodierer beschrieben, welcher in zwei verschiedenen Ausführungsformen in den Fig. 2 und 3 dargestellt ist.

Der Decodierer empfängt gespreizte Datensignale DS, welche zunächst z.B. mittels eines Subpulsfilters geglättet und analog/digital gewandelt werden. Diese werden dann an den Eingang E des Decodierers angelegt. Die Einhüllende des gespreizten Datensignals DS nach einem Subpulsfilter und A/D-Wandler wird als positive oder negative Digitalzahl (Chip), hier symbolisiert als +1 bzw. -1, je nach Phasenlage des gespreizten Datensignals DS, ausgegeben. In diesen Ausführungsbeispielen handelt es sich bei den gespreizten Datensignalen DS um binäre Datensequenzen der Länge 8, d.h. acht Chips, welche mittels der Spreizsequenzen S gespreizt wurden. Selbstverständlich kann der Decodierer entsprechend für jede Datensequenzlänge $2^n$ angepasst werden.

Die seriell empfangenen Sequenzen des gespreizten Datensignals DS werden daraufhin gespeichert und in eine parallele Form gebracht. Dies kann z.B. mittels eines Schieberegisters oder eines anderen Seriell-Parallel-Umsetzers erfolgen.

In der beschriebenen Ausführungsform werden die acht Chips des empfangenen digitalen gespreizten Datensignals DS über einen Verzweiger 1 parallel in die Schieberegister 2, 4, 5, 7 gespeist, welche nach jeder Subpulsdauer $\tau$ weiterschalten. Die Zeitpunkte, zu welchen die Chips in die Schieberegister 2, 4, 5, 7 gespeist wurden, werden durch die Zeitangaben t1 bis t8 angegeben. Zwei der Schieberegister 5, 7 werden in umgekehrter Reihenfolge befüllt, was der Zeitumkehr aus Schritt 104 des erfindungsgemäßen Verfahrens entspricht, da bei dem späteren Auslesen der Sequenz aus den Schieberegistern 5, 7 die zeitliche Anordnung der Chips vertauscht ist, also ein zeitumgekehrtes Auslesen erfolgt. In einer alternativen Ausführungsform, welche in Fig. 3 dargestellt ist, kommen nur zwei Schieberegister 4, 7 zum Einsatz. Natürlich verzweigt der Verzweiger 1 das digitale gespreizte Datensignal DS dann auch nur zweifach.

Zwei der in den Schieberegistern 2, 4, 5, 7 gespeicherten Sequenzen des gespreizten Datensignals DS werden in Komplementärform gebracht, indem die Chips der Sequenzen alternierend mit +1 bzw. -1 bewertet (multipliziert) werden. Nach der ersten Subpulsdauer $\tau$ wird z.B. nach der ersten Stelle des Schieberegisters 2, 7 ein zweites Signal abgeleitet und abwechselnd in einem Filterteil mit + und - bewertet. Durch die Bewertung des empfangenen Signalcodes mit der einfachen Folge von alternierenden Phasensprüngen $B_i$ = +, -, +, -, +, -, +, - (oder Digitalwerte +1, -1 usw. oder z.B. L, o usw. bei QPSK) entsteht das zugehörige bewertete gespreizte Datensignal DS', für ein mit einer Golay- oder Golay-Walsh-Sequenz gespreiztes Datensignal DS das komplementäre Datensignal DS'. Alternativ kann die Bewertung des empfangenen Signalcodes mit der +/- Folge auch in paralleler Schaltung erfolgen, wie in den Ausführungsformen der Fig. 2 und 3 dargestellt.

Sobald die Schieberegister gefüllt sind, werden die Chips parallel ausgelesen. Zwei der vier gespeicherten Sequenzen der gespreizten Datensignale DS, DS', darunter eine der beiden Sequenzen in bewerteter Form, werden wie oben erwähnt zeitumgekehrt ausgelesen, so dass Signalsequenzen eines zeitumgekehrten gespreizten Datensignals ($DS_{rev}$, DSrev') entstehen. Die Signalsequenzen werden daraufhin (entsprechend Schritt 105 in Fig.1) in Korrelationsfiltern ($KF_1$, $KF_2$, $KF_3$, $KF_4$) mit der jeweiligen, dort gespeicherten, Spreizsequenz S(3,m), S (3,m)$_{Rev}$, S (3,m)', S (3,m) $_{Rev}$' korreliert.

Der Decodierer kann so aufgebaut werden, dass für jede der verschiedenen Spreizsequenzen S des Mehr-Teilnehmerbetriebs eine Decodierschaltung nach Fig. 2 oder 3 mit jeweils gespeicherten Spreizsequenzen S vorgesehen wird. In einer bevorzugten Ausführungsform wird nur eine Decodierschaltung verwendet, deren Korrelationsschaltungen einen beschreibbaren Speicher aufweisen, in den die Spreizsequenz S für den jeweiligen Teilnehmer gespeichert werden kann, beispielsweise bei der Initialisierung des Kommunikationsvorganges.

Abschließend wird in dem Summationsfilter 8 die Summe über die vier Auto- bzw. Kreuzkorrelationen der vier parallel verarbeiteten Signalsequenzen gebildet.

Dies kann beispielsweise mit dem Summationsfilter 8, gezeigt in den Fig. 2 und 3 vor dem Ausgang A der Vorrichtung, geschehen, welcher eine einfache Addition ist. Als Nutzsignal wird dabei das Autokorrelationssignal (mit Wert 32 in den Beispielen nach Fig. 5) erkannt, das von den deutlich kleineren Nebenmaxima (mit Wert 16) deutlich unterschieden ist und elektronisch ohne Weiteres verarbeitet werden kann.

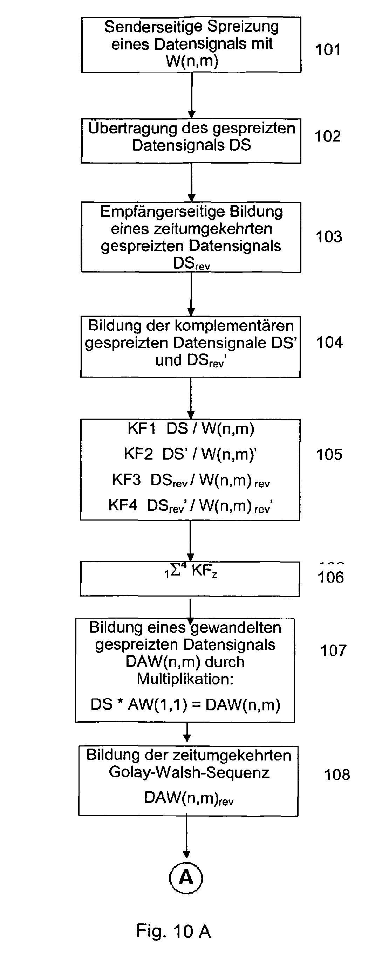

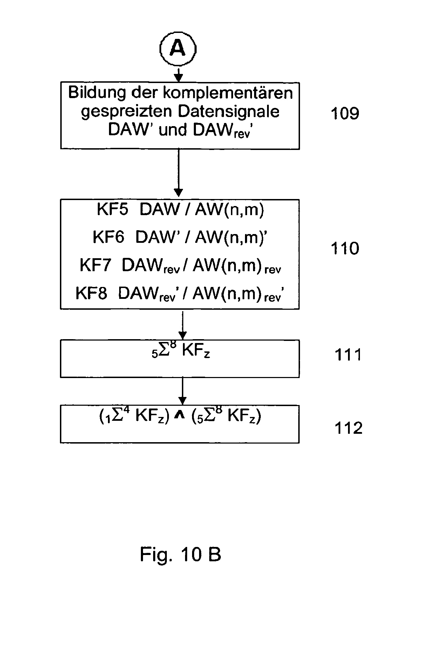

Die zweite Ausführungsform des Verfahrens nach WO 2010/108823 sowie deren Realisierung als Vorrichtung wird im Folgenden anhand der Fig. 8 bis 13 erläutert. Diese Ausführungsform ist die Grundlage für die vorliegende Erfindung.

Diese zweite Ausführungsform baut auf der ersten Ausführungsform in WO 2010/108823 auf.

Zum Decodieren eines empfangenen, mit einer Walsh-Sequenz gespreizten Datensignals DS verwendet die zweite Ausführungsform sowohl gespeicherte Walsh-Sequenzen als auch gespeicherte Golay-Walsh-Sequenzen. Dazu wird sowohl die Summe der Korrelationen des empfangenen gespreizten Datensignals DS mit gespeicherten Walsh-Sequenzen $W(n,m)$ als auch nach Multiplikation mit der Golay-Walsh-Sequenz $AW(n,i)$ die Korrelationen des so entstandenen gewandelten gespreizten Datensignals $DAW(n,m)$ mit gespeicherten Golay-Walsh-Sequenzen $AW(n,m)$, $AW(n,m)'$, $AW(n,m)_{rev}$ und $AW(n,m)_{rev}'$ gebildet, siehe Schritte 106 und 111. Nachdem die beiden Summen in Schritt 106 und 111 gebildet sind, werden im letzten Schritt 112 beide Summen durch Konjunktion verknüpft:

$$\left(_1\Sigma^4\ KF_z\right) \wedge \left(_5\Sigma^8\ KF_z\right). \qquad\qquad \text{Gleichung (6)}$$

Das Ergebnis nach Ausführung der Verfahrensschritte 101 bis 106 ohne die Ergänzung der zweiten Ausführungsform zeigen die Beispiele der ersten acht Korrelationen in den Figuren. 6 und 7.

Zu jedem Wert eines Nebenmaximums einer KKF der Walsh-Sequenzen korrespondiert ein Nullwert der KKF der entsprechenden Golay-Walsh-Sequenzen bis auf das Hauptmaximum AKF bei $\tau = 0$, das voll erhalten bleibt. Mithin werden alle Nebenmaxima bei allen Verschiebungen $\tau > 0$ durch die Operation der logischen UND-Funktion unterdrückt, während die AKF das gewünschte Ergebnis aufweist: die ideale Form der Einheitspuls-Spitze bei $\tau = 0$ für die Entdeckung des Nutzsignals und gleichzeitig bei allen Verschiebungen $\tau > 0$ sind alle Nebenmaxima gleich Null.

Die drei Korrelationspaare $W(3,1) / W0,3)$ (siehe Fig. 6), $W(3,2) / W(3,4)$ und $W(3,5) / W(3,7)$ von insgesamt 27 Möglichkeiten der Kreuzkorrelation zeigen kleine Nebenmaxima. Die Autokorrelationssummen, die bei den originalen Walsh-Sequenzen dreiecksförmig breit und damit ungeeignet zur Synchronisation sind, sind zwar verbessert, enthalten aber neben der Nutzsignalspitze jeweils immer noch hohe Nebenmaxima. Dies wird in Fig. 5 ersichtlich. Kommt ein gespreiztes Datensignal $AW(3,7)$ an, so ergibt sich entsprechend der vierten Zeile in den Spalten $t_6$ und $t_{10}$ ein Ausgangswert von 16. Dieser Wert wird jedoch durch die im Folgenden dargestellte Konjunktion mit der Summe der Walsh-Sequenzen-Korrelationen, die überall den Wert Null hat, unterdrückt.

Die im Decodierer durch Multiplikation mit den gespeicherten Walsh-Sequenzen erzeugten Golay-Walsh-Sequenzen $AW(n,m)$ haben folgende, innere Symmetrieeigenschaft, die im Empfangsfilter zur idealen Impulskompression ausgenutzt wird: bei der obigen Addition werden für die Summe der AKF alle Nebenmaxima-Werte zu null wie aus der Tabelle in Fig. 5 ersichtlich und graphisch in Figur 13 dargestellt. Mithin gilt bei einer UND-Verknüpfung der AKF-Ergebnisse der Zeilen $W(3,1)/W(3,1)$ mit den Ergebnissen der entsprechenden Golay-Walsh-Sequenz $AW(3,1)/AW(3,1)$ für die Summe der AKF:

Beispiel 1:

| | |
|---|---|
| $W(3,1)/W(3,1)$: | 0,8,0,16,0,24,0,32,0,24,0,16,0,8,0 |
| | Logisch "UND" |
| $AW(3,1)/AW(3,1)$: | 0,0,0,0,0,0,0,32,0,0,0,0,0,0,0 |
| = | 0,0,0,0,0,0,0,32,0,0,0,0,0,0,0 |

Des Weiteren haben die KKF zwischen den mit den Verfahrensschritten 101 bis 106 gespreizten Datensignalen der ersten Ausführungsform immer noch vier, im Vergleich zur AKF sehr kleine Werte, welche im Falle der beispielhaft angegebenen Werte für die Golay-Walsh-Sequenz mit acht Chips auch für jeweils drei der sieben weiteren benutzten Golay-Walsh-Sequenzen existieren, im Falle der $AW(3,1)$ für $AW(3,6)$, $AW(3,7)$ und $AW(3,8)$, wie in Fig. 6 und Fig. 7 ersichtlich wird.

Durch die zweite Ausführungsform des Verfahrens nach WO 2010/108823 werden sowohl die AKF- wie auch die KKF-Eigenschaften der Walsh-Sequenzen bis zum absoluten Optimum verbessert, denn die UND-Verknüpfung der Summen der KKF von Walsh-Sequenzen mit denen der Golay-Walsh-Sequenzen führt zum vollständigen Auslöschen der Nebenmaxima, wie die folgenden zwei Beispiele zeigen:

Beispiel 2:

| W(3,1)/W(3,3): | 0,8,0,0,0,-8,0,0,0,-8,0,0,0,8,0 |
|---|---|
| | Logisch "UND" |
| AW(3,1)/AW(3,3): | 0,0,0,0,0,0,0,0,0,0,0,0,0,0,0 |
| = | 0,0,0,0,0,0,0,0,0,0,0,0,0,0,0 |

Beispiel 3:

| W(3,1)/W(3,7): | 0,0,0,0,0,0,0,0,0,0,0,0,0,0,0 |
|---|---|
| | Logisch "UND" |
| AW(3,1)/AW(3,7): | 0,0,0,0,0,16,0,0,0,16,0,0,0,0,0 |
| = | 0,0,0,0,0, 0,0,0,0, 0,0,0,0,0 |

Dies gilt ebenfalls für alle weiteren Summen der KKF wie aus den beiden Figuren 6 und 7 ersichtlich.

Figur 13 fasst das Gesamtergebnis des neuen Verfahrens von AKF und KKF für das Beispiel der Walsh-Sequenzen W(3,m) zusammen.

Der Vergleich mit einer UND-Operation im Empfänger des Ausgangswerts aus den Korrelationssummen der Walsh-Sequenzen nach Verfahrensschritten 101 bis 106 mit dem Schwellwert aus den Korrelationssummen der Golay-Walsh-Sequenzen liefert also eine absolut reine Impulsspitze ohne Nebenmaxima für die AKF und alle KKF bleiben ebenfalls absolut Null wie in Figur 13 dargestellt.

Die genannten Decodierer können alternativ mit digitalen Signalprozessoren (DSP) realisiert werden. Eine weitere Möglichkeit der Realisierung besteht darin, die schnelle Fouriertransformation DFFT und/oder die schnelle Hadamardtransformation im Decodierer zu verwenden. Entsprechendes gilt für eine Vorrichtung zur Übertragung digitaler Datensignale, welche einen Codierer und den Decodierer gemäß der Beschreibung umfasst.

Der in WO 2010/108823 noch ungelöste Nachteil der asynchronen Störungen wird mit dem Verfahren und dem Decodierer behoben, die Gegenstand der vorliegenden Erfindung sind.

Der Decodierer nach den Figuren. 11 oder 12 liefert bei perfekter synchroner Übertragung den idealen Dirac-Impuls, aber schon bei kleinen Abweichungen von der Synchronizität treten Störungen auf. So entsteht z.B. aus der Walsh-Sequenz W(3,2) bei kontinuierlicher, periodischer Übertragung alleine durch eine zeitliche Verzögerung um zwei Chiptakte die Walsh-Sequenz W(3,3) =11 -1-1-1 -111.

| 1 | 1 | 1 | 1 | -1 | -1 | -1 | -1 | 1 | 1 | 1 | 1 | -1 | -1 | -1 | -1 | $W(3,2)$ |
|---|---|---|---|---|---|---|---|---|---|---|---|---|---|---|---|---|
| 1 | 1 | -1 | -1 | -1 | -1 | 1 | 1 | 1 | 1 | -1 | -1 | -1 | -1 | 1 | 1 | $W(3,3)$ |

Erfolgt bei der Übertragung keine Synchronisation (wie z.B. beim UMTS Uplink), so führt diese Mehrdeutigkeit zu Störungen wie Nebensprechen oder Unterbrechungen, da fremde, asynchron eintreffende Teilnehmersignale bei gleicher Amplitude nicht unterschieden werden können.

Im Folgenden soll dies Problem noch näher dargestellt werden, das durch den erfindungsgemässen Decodierer behoben wird.

Angenommen, man beaufschlagt den Decodierer mit einer periodisch einlaufenden, synchronen Walsh-Sequenz

$$W(3,2)= \quad 1 \quad 1 \quad 1 \quad 1 \quad -1 \quad -1 \quad -1 \quad -1,$$

Die N =8 Elemente (Chips) dieser Sequenz werden schrittweise pro Subpuls τ (Chiptakt) in die N-stufigen Register des Decodierers als digitale Zahlen 0 oder 1 eingelesen. Insgesamt werden 2N-1 = 15 Chiptakte benötigt, beginnend mit dem Laden des ersten Chips in die Register bis zum Auslaufen des letzten Chips.

Bei jedem Chiptakt werden die Korrelationen gemäß Gleichung (6) für den jeweiligen Inhalt der Register berechnet. In Tabelle 8 sind die Gesamtergebnisse der AKF- und KKF- Funktionen dargestellt, die der Decodierer mit der gespeicherten Sequenz

$$W(3,3) = \quad 1 \quad 1 \quad -1 \quad -1 \quad -1 \quad -1 \quad 1 \quad 1$$

für jeden der 17 Zeitschritte (Chiptakte) (entsprechend einer Sequenzlänge N=8) berechnet, vom Ankommen des Signals in den Zeitschritten t1 bis t8 über ein voll synchron im Decodierer stehendes Signal (bei Zeitschritt $t_9$) und Auslaufen des Signals in weiteren sieben Zeitschritten ($t_{10}$ bis $t_{16}$).

Zu den Zeitpunkten $t_1$, $t_9$ und $t_{17}$ sind die periodisch aufeinanderfolgend einlaufenden Walsh-Sequenzen W (3,2) genau synchron (d.h. ohne Zeitversatz) zu den gespeicherten Walsh-Sequenzen W (3,3) und die Korrelation ergibt daher genau den Wert o. Zu den anderen Zeitpunkten während des Einlesens der eintreffenden Walsh-Sequenzen W (3,2) ergibt die bei jedem Chiptakt durchgeführte Korrelation wegen des Versatzes zu den gespeicherten Walsh-Funktionen W (3,3) Maxima, die eine falsche Erkennung als Walsh-Funktion W (3,3) auslösen können.

Bei periodischer, d.h. aufeinanderfolgender Übertragung der Datensignale DS ergeben sich so störende Maxima zu den Zeiten $t_3$, $t_7$ und $t_{11}$, $t_{15}$, in denen das Signal DS noch nicht vollständig im Decodierer angekommen ist.

| Zeitachse (Verschiebung im Korrelationsblock) | | | | | | | | | | | | | | | Chiptakt |
|---|---|---|---|---|---|---|---|---|---|---|---|---|---|---|---|
| t15 | t14 | t13 | t12 | t11 | t10 | t9 | t8 | t7 | t6 | t5 | t4 | t3 | t2 | t1 | |
| 0 | 0 | 0 | 0 | 0 | 0 | 0 | 0 | 0 | 0 | 0 | 0 | 0 | 0 | 0 | 1 |
| 0 | 0 | 0 | 8 | 0 | 0 | 0 | -16 | 0 | 0 | 0 | 8 | 0 | 0 | 0 | 2 |
| 0 | 0 | 0 | 0 | 0 | 0 | 0 | 32 | 0 | 0 | 0 | 0 | 0 | 0 | 0 | 3 |
| 0 | 4 | 0 | 0 | 0 | -4 | 0 | -16 | 0 | -4 | 0 | 0 | 0 | 4 | 0 | 4 |
| 0 | 0 | 0 | 0 | 0 | 0 | 0 | 0 | 0 | 0 | 0 | 0 | 0 | 0 | 0 | 5 |
| 0 | 0 | 0 | -8 | 0 | 0 | 0 | 16 | 0 | 0 | 0 | -8 | 0 | 0 | 0 | 6 |
| 0 | 0 | 0 | 0 | 0 | 0 | 0 | 32 | 0 | 0 | 0 | 0 | 0 | 0 | 0 | 7 |
| 0 | -4 | 0 | 0 | 0 | 4 | 0 | 16 | 0 | 4 | 0 | 0 | 0 | -4 | 0 | 8 |
| 0 | 0 | 0 | 0 | 0 | 0 | 0 | 0 | 0 | 0 | 0 | 0 | 0 | 0 | 0 | 9 |
| 0 | 0 | 0 | 8 | 0 | 0 | 0 | -16 | 0 | 0 | 0 | 8 | 0 | 0 | 0 | 10 |
| 0 | 0 | 0 | 0 | 0 | 0 | 0 | 32 | 0 | 0 | 0 | 0 | 0 | 0 | 0 | 11 |
| 0 | 4 | 0 | 0 | 0 | -4 | 0 | -16 | 0 | -4 | 0 | 0 | 0 | 4 | 0 | 12 |
| 0 | 0 | 0 | 0 | 0 | 0 | 0 | 0 | 0 | 0 | 0 | 0 | 0 | 0 | 0 | 13 |
| 0 | 0 | 0 | -8 | 0 | 0 | 0 | 16 | 0 | 0 | 0 | -8 | 0 | 0 | 0 | 14 |
| 0 | 0 | 0 | 0 | 0 | 0 | 0 | 32 | 0 | 0 | 0 | 0 | 0 | 0 | 0 | 15 |
| 0 | -4 | 0 | 0 | 0 | 4 | 0 | 16 | 0 | 4 | 0 | 0 | 0 | -4 | 0 | 16 |
| 0 | 0 | 0 | 0 | 0 | 0 | 0 | 0 | 0 | 0 | 0 | 0 | 0 | 0 | 0 | 17 |

Left labels: W(3,2)/W(3,3) at Chiptakt 1, 9 und 17.

Tabelle 8

Die Berechnung der Korrelationen im Decodierer bei den Chiptakten $t_3$, $t_7$ und $t_{11}$, $t_{15}$ nach Gleichung (6) liefert Nebenmaxima (hier mit Höhe 32 der viermaligen Addition bei der Berechnung der vier Korrelationsfunktionen nach Gleichung (6) für den Fall von N=8 Chips); diese Nebenmaxima könnten vom Decodierer fälschlicherweise als AKF-Hauptmaximum erkannt werden und werden im folgenden störende Nebenmaxima genannt.

Diese vor oder nach vollständigem, mittigem Füllen des Decodierers mit dem eintreffenden gespreizten Datensignal DS auftretenden störenden Nebenmaxima werden gemäß der vorliegenden Erfindung beseitigt, indem die Korrelationen AKF und KKF für eine aperiodische statt eine periodische Übertragung berechnet werden, d.h. die Korrelation wird nicht mit direkt aufeinanderfolgend eintreffenden Chipsequenzen durchgeführt.

Die vorliegende Erfindung hat erkannt, dass die störenden Nebenmaxima beseitigt werden können, wenn die Symmetrie von positiven und negativen Spitzen rund um das AKF-Hauptmaximum bei Walsh-Sequenzen ausgenutzt wird, siehe dazu die Beispiele in Tabelle 10. Die Summe der Kreuzkorrelations-Nebenmaxima für $W_{(3,2)}/W_{(3,1)}$, $W_{(3,2)}/W_{(3,3)}$ und $W_{(3,2)}/W_{3,4}$ vor und nach dem synchronen, mittigen KKF-Hauptmaximum hebt sich jeweils zu Null auf. Diese Möglichkeit wurde von Entspreizverfahren nach dem Stand der Technik nicht erkannt, die im Wesentlichen auf statistischen Auswertungen der gestört eintreffenden Datensignale beruhen.

Wenn entsprechend der vorliegenden Erfindung der am Decodierer eintreffende periodische Strom von gespreizten Daten aperiodisch gemacht wird, liefert der Decodierer im ersten Schritt der Berechnung der Korrelationen das in Tabelle 9 dargestellte Ergebnis, in dem geringere Werte der Nebenmaxima auftreten, im Gegensatz zur Korrelation von periodisch eintreffenden Datensignalen entsprechend Tabelle 8.. Diese geringeren Nebenmaxima können dann mit einem weiteren Schritt der vorliegenden Erfindung nach Gleichung (9) unten eliminiert werden. Sie werden dann nicht mehr irrtümlich als Nutzdaten interpretiert.

| Zeitachse (Verschiebung im Korrelationsblock) | | | | | | | | | | | | | | | Chip-takt |
|---|---|---|---|---|---|---|---|---|---|---|---|---|---|---|---|
| t15 | t14 | t13 | t12 | t11 | t10 | t9 | t8 | t7 | t6 | t5 | t4 | t3 | t2 | t1 | |
| 0 | 0 | 0 | 0 | 0 | 0 | 0 | 0 | 0 | 0 | 0 | 0 | 0 | 0 | 0 | t1 |
| 0 | 0 | 0 | 2 | 0 | -2 | 0 | -4 | 0 | -2 | 0 | 2 | 0 | 0 | 0 | t2 |
| 0 | 0 | 0 | -4 | 0 | 0 | 0 | -8 | 0 | 0 | 0 | -4 | 0 | 0 | 0 | t3 |
| 0 | 0 | 0 | 0 | 0 | 0 | 0 | -4 | 0 | 0 | 0 | 0 | 0 | 0 | 0 | t4 |
| 0 | 0 | 0 | 0 | 0 | 0 | 0 | 0 | 0 | 0 | 0 | 0 | 0 | 0 | 0 | t5 |
| 0 | 0 | 0 | -6 | 0 | 0 | 0 | 12 | 0 | 0 | 0 | -6 | 0 | 0 | 0 | t6 |
| 0 | 0 | 0 | 0 | 0 | 0 | 0 | 24 | 0 | 0 | 0 | 0 | 0 | 0 | 0 | t7 |
| 0 | -2 | 0 | 0 | 0 | 2 | 0 | 12 | 0 | 2 | 0 | 0 | 0 | -2 | 0 | t8 |
| 0 | 0 | 0 | 0 | 0 | 0 | 0 | 0 | 0 | 0 | 0 | 0 | 0 | 0 | 0 | t9 |
| 0 | 0 | 0 | 6 | 0 | 0 | 0 | -12 | 0 | 0 | 0 | 6 | 0 | 0 | 0 | t10 |
| 0 | 0 | 0 | 0 | 0 | 0 | 0 | -24 | 0 | 0 | 0 | 0 | 0 | 0 | 0 | t11 |
| 0 | 0 | 0 | 0 | 0 | 0 | 0 | -12 | 0 | 0 | 0 | 0 | 0 | 0 | 0 | t12 |
| 0 | 0 | 0 | 0 | 0 | 0 | 0 | 0 | 0 | 0 | 0 | 0 | 0 | 0 | 0 | t13 |
| 0 | 0 | 0 | -2 | 0 | 0 | 0 | -4 | 0 | 0 | 0 | -2 | 0 | 0 | 0 | t14 |
| 0 | 0 | 0 | 0 | 0 | 0 | 0 | 8 | 0 | 0 | 0 | 0 | 0 | 0 | 0 | t15 |
| 0 | -2 | 0 | 0 | 0 | 2 | 0 | 4 | 0 | 2 | 0 | 0 | 0 | -2 | 0 | t16 |
| 0 | 0 | 0 | 0 | 0 | 0 | 0 | 0 | 0 | 0 | 0 | 0 | 0 | 0 | 0 | t17 |

W(3,2)·W(3,3)

## Tabelle 9

W(3,2)W(3,1)

| 0 | 0 | 0 | 0 | 0 | 0 | 0 | 0 | 0 | 0 | 0 | 0 | 0 | 0 |
|---|---|---|---|---|---|---|---|---|---|---|---|---|---|
| 0 | 0 | 0 | 2 | 0 | -2 | 0 | -4 | 0 | -2 | 0 | 2 | 0 | 0 |
| 0 | 0 | 0 | 4 | 0 | 0 | 0 | -8 | 0 | 0 | 0 | 4 | 0 | 0 |
| 0 | 0 | 0 | 0 | 0 | 0 | 0 | -12 | 0 | 0 | 0 | 0 | 0 | 0 |
| 0 | 0 | 0 | 0 | 0 | 0 | 0 | -16 | 0 | 0 | 0 | 0 | 0 | 0 |
| 0 | 0 | 0 | 0 | 0 | -4 | 0 | -12 | 0 | -4 | 0 | 0 | 0 | 0 |
| 0 | 0 | 0 | 0 | 0 | 0 | 0 | -8 | 0 | 0 | 0 | 0 | 0 | 0 |
| 0 | 2 | 0 | 0 | 0 | -2 | 0 | -4 | 0 | -2 | 0 | 0 | 2 | 0 |
| 0 | 0 | 0 | 0 | 0 | 0 | 0 | 0 | 0 | 0 | 0 | 0 | 0 | 0 |
| 0 | 0 | 0 | -2 | 0 | 2 | 0 | 4 | 0 | 2 | 0 | -2 | 0 | 0 |
| 0 | 0 | 0 | -4 | 0 | 0 | 0 | 8 | 0 | 0 | 0 | -4 | 0 | 0 |
| 0 | 0 | 0 | 0 | 0 | 0 | 0 | 12 | 0 | 0 | 0 | 0 | 0 | 0 |
| 0 | 0 | 0 | 0 | 0 | 0 | 0 | 16 | 0 | 0 | 0 | 0 | 0 | 0 |
| 0 | 0 | 0 | 0 | 0 | 4 | 0 | 12 | 0 | 4 | 0 | 0 | 0 | 0 |
| 0 | 0 | 0 | 0 | 0 | 0 | 0 | 8 | 0 | 0 | 0 | 0 | 0 | 0 |
| 0 | -2 | 0 | 0 | 0 | 2 | 0 | 4 | 0 | 2 | 0 | 0 | -2 | 0 |
| 0 | 0 | 0 | 0 | 0 | 0 | 0 | 0 | 0 | 0 | 0 | 0 | 0 | 0 |

$a \equiv \Sigma = -64$

$b \equiv \Sigma = +64$

$a+b \equiv \Sigma = +0$

W(3,2)W(3,2)

| 0 | 0 | 0 | 0 | 0 | 0 | 0 | 0 | 0 | 0 | 0 | 0 | 0 | 0 |
|---|---|---|---|---|---|---|---|---|---|---|---|---|---|
| 0 | 0 | 0 | 2 | 0 | -2 | 0 | -4 | 0 | -2 | 0 | 2 | 0 | 0 |
| 0 | 0 | 0 | 4 | 0 | 0 | 0 | -8 | 0 | 0 | 0 | 4 | 0 | 0 |
| 0 | 0 | 0 | 0 | 0 | 0 | 0 | -12 | 0 | 0 | 0 | 0 | 0 | 0 |
| 0 | 0 | 0 | 0 | 0 | 0 | 0 | -16 | 0 | 0 | 0 | 0 | 0 | 0 |
| 0 | 0 | 0 | 0 | 0 | 0 | 0 | -4 | 0 | 0 | 0 | 0 | 0 | 0 |
| 0 | 0 | 0 | 0 | 0 | 0 | 0 | 8 | 0 | 0 | 0 | 0 | 0 | 0 |
| 0 | 0 | 0 | 0 | 0 | 0 | 0 | 20 | 0 | 0 | 0 | 0 | 0 | 0 |
| 0 | 0 | 0 | 0 | 0 | 0 | 0 | 32 | 0 | 0 | 0 | 0 | 0 | 0 |
| 0 | 0 | 0 | 0 | 0 | 6 | 0 | 20 | 0 | 6 | 0 | 0 | 0 | 0 |
| 0 | 0 | 0 | 0 | 0 | 0 | 0 | 8 | 0 | 0 | 0 | 0 | 0 | 0 |
| 0 | 0 | 0 | 0 | 0 | 0 | 0 | -4 | 0 | 0 | 0 | 0 | 0 | 0 |
| 0 | 0 | 0 | 0 | 0 | 0 | 0 | -16 | 0 | 0 | 0 | 0 | 0 | 0 |
| 0 | 0 | 0 | 0 | 0 | -4 | 0 | -12 | 0 | -4 | 0 | 0 | 0 | 0 |
| 0 | 0 | 0 | 0 | 0 | 0 | 0 | -8 | 0 | 0 | 0 | 0 | 0 | 0 |
| 0 | 2 | 0 | 0 | 0 | -2 | 0 | -4 | 0 | -2 | 0 | 0 | 2 | 0 |
| 0 | 0 | 0 | 0 | 0 | 0 | 0 | 0 | 0 | 0 | 0 | 0 | 0 | 0 |

$a \equiv \Sigma = -16$

$/-16-16/ \; -/-16-(-16)/+32 = 64$
siehe Gleichung (9)

$b \equiv \Sigma = -16$

W(3,2)W(3,3)

| 0 | 0 | 0 | 0 | 0 | 0 | 0 | 0 | 0 | 0 | 0 | 0 | 0 | 0 |
|---|---|---|---|---|---|---|---|---|---|---|---|---|---|
| 0 | 0 | 0 | 2 | 0 | -2 | 0 | -4 | 0 | -2 | 0 | 2 | 0 | 0 |
| 0 | 0 | 0 | 4 | 0 | 0 | 0 | -8 | 0 | 0 | 0 | 4 | 0 | 0 |
| 0 | 0 | 0 | 0 | 0 | 0 | 0 | -4 | 0 | 0 | 0 | 0 | 0 | 0 |
| 0 | 0 | 0 | -8 | 0 | 0 | 0 | 12 | 0 | 0 | 0 | -8 | 0 | 0 |
| 0 | 0 | 0 | 0 | 0 | 0 | 0 | 24 | 0 | 0 | 0 | 0 | 0 | 0 |
| 0 | -2 | 0 | 0 | 0 | 2 | 0 | 12 | 0 | 2 | 0 | 0 | -2 | 0 |
| 0 | 0 | 0 | 0 | 0 | 0 | 0 | 0 | 0 | 0 | 0 | 0 | 0 | 0 |
| 0 | 0 | 0 | 8 | 0 | 0 | 0 | -12 | 0 | 0 | 0 | 8 | 0 | 0 |
| 0 | 0 | 0 | 0 | 0 | 0 | 0 | -24 | 0 | 0 | 0 | 0 | 0 | 0 |
| 0 | 0 | 0 | 0 | 0 | 0 | 0 | -12 | 0 | 0 | 0 | 0 | 0 | 0 |
| 0 | 0 | 0 | -2 | 0 | 0 | 0 | 4 | 0 | 0 | 0 | -2 | 0 | 0 |
| 0 | 0 | 0 | 0 | 0 | 0 | 0 | 8 | 0 | 0 | 0 | 0 | 0 | 0 |
| 0 | -2 | 0 | 0 | 0 | 2 | 0 | 4 | 0 | 2 | 0 | 0 | -2 | 0 |
| 0 | 0 | 0 | 0 | 0 | 0 | 0 | 0 | 0 | 0 | 0 | 0 | 0 | 0 |

$a \equiv \Sigma = -4$

$/-4-20/ \; -/-4-(-20)/+24 = 32$
siehe Gleichung (9)

$b \equiv \Sigma = -20$

W(3,2)W(3,4)

| 0 | 0 | 0 | 0 | 0 | 0 | 0 | 0 | 0 | 0 | 0 | 0 | 0 | 0 |
|---|---|---|---|---|---|---|---|---|---|---|---|---|---|
| 0 | 0 | 0 | 2 | 0 | -2 | 0 | -4 | 0 | -2 | 0 | 2 | 0 | 0 |
| 0 | 0 | 0 | 4 | 0 | 0 | 0 | -8 | 0 | 0 | 0 | 4 | 0 | 0 |
| 0 | 0 | 0 | 0 | 0 | 0 | 0 | -4 | 0 | 0 | 0 | 0 | 0 | 0 |
| 0 | 0 | 0 | 0 | 0 | 0 | 0 | 0 | 0 | 0 | 0 | 0 | 0 | 0 |
| 0 | 0 | 0 | -2 | 0 | 0 | 0 | 4 | 0 | 0 | 0 | -2 | 0 | 0 |
| 0 | 0 | 0 | 0 | 0 | 0 | 0 | 8 | 0 | 0 | 0 | 0 | 0 | 0 |
| 0 | 0 | 0 | 0 | 0 | 0 | 0 | 4 | 0 | 0 | 0 | 0 | 0 | 0 |
| 0 | 0 | 0 | 0 | 0 | 0 | 0 | 0 | 0 | 0 | 0 | 0 | 0 | 0 |
| 0 | 0 | 0 | -2 | 0 | 0 | 0 | 4 | 0 | 0 | 0 | -2 | 0 | 0 |
| 0 | 0 | 0 | -4 | 0 | 0 | 0 | 8 | 0 | 0 | 0 | -4 | 0 | 0 |
| 0 | 0 | 0 | 0 | 0 | 0 | 0 | 4 | 0 | 0 | 0 | 0 | 0 | 0 |
| 0 | 0 | 0 | 0 | 0 | 0 | 0 | 0 | 0 | 0 | 0 | 0 | 0 | 0 |
| 0 | 0 | 0 | 2 | 0 | 0 | 0 | -4 | 0 | 0 | 0 | 2 | 0 | 0 |
| 0 | 0 | 0 | 0 | 0 | 0 | 0 | -8 | 0 | 0 | 0 | 0 | 0 | 0 |
| 0 | 2 | 0 | 0 | 0 | -2 | 0 | -4 | 0 | -2 | 0 | 0 | 2 | 0 |
| 0 | 0 | 0 | 0 | 0 | 0 | 0 | 0 | 0 | 0 | 0 | 0 | 0 | 0 |

$a \equiv \Sigma = \pm 0$

$b \equiv \Sigma = \pm 0$

$a+b \equiv \Sigma = +0$

Tabelle 10

Im Folgenden wird das Verfahren zur Berechnung der Korrelationsfunktionen bei aperiodischem Empfang dargestellt.

Für eine Sequenz mit N Chips werden vor und nach dem zu untersuchenden Maximum der Korrelationsfunktionen des erwarteten Nutzsignals (beim Chiptakt t8) die bei jedem Chiptakt berechneten Korrelationsfunktionen (Gleichung (6)) der jeweils N-1 vorangehenden und nachfolgenden Chiptakte addiert. Im Beispiel mit N = 8 werden alle Nebenmaxima für 7 Chiptakte $t_1$ bis $t_7$ (entsprechend den nacheinander empfangenden und in die Register des Decodierers eingelesenen Chips) vor dem zu untersuchenden Maximum addiert und es werden alle Nebenmaxima für die 7 Chiptakte $t_9$ bis $t_{15}$ nach dem zu untersuchenden Maximum addiert. Anschließend wird eine Schwellwerterkennung wie folgt durchgeführt:

$$\text{Vorzeichengerechte Addition aller vorhergehenden Maxima} = a$$

$$\text{Gleichung (7)}$$

$$\text{Vorzeichengerechte Addition aller nachfolgenden Maxima} = b.$$

$$\text{Gleichung (8)}$$

Ein Nutzbit wird im Decodierer erkannt, wenn die folgende Gleichung erfüllt ist:

$$(ABS(a + b) - ABS(a - b)) + ABS(\text{Hauptmaximum}) > 4*N$$

$$\text{Gleichung (9)}$$

Hier bedeutet ABS den jeweiligen Absolutwert.

Tabelle 10 zeigt ein Beispiel der Anwendung dieses Verfahrens, wobei für die Golay-Paare $W_{(3,2)}$ / $W_{(3,3)}$ das Nebenmaximum die Grösse 24 aufweist (dritte Matrix in Tabelle 10). Die zweite Matrix in Tabelle 10 zeigt den Fall, dass eine einlaufende Sequenz W (3, 2) mit sich selbst korreliert wird, d.h. wenn das Datensignal ohne zeitliche Verzögerung am Decodierer eintrifft; für dieses Nutzsignal ist das Hauptmaximum 32 zum Zeitpunkt t=8.

Dieses Verfahren stellt sicher, dass bei asynchronem Einlaufen einer Sequenz alle Nebenmaxima der Korrelationsberechnung unterhalb der Schwelle von 4*N bleiben (hier im Beispiel 32), während das Hauptmaximum (bei t8) im Fall, dass die einlaufende Sequenz voll synchron in den Decodierer eingelesen wurde, im idealen, störungsfreien Fall gleich oder grösser 64 ist; selbst bei fehlerhaft empfangenen Chips des gesuchten, synchronen Nutzsignals ist der Korrelationswert jedoch mindestens grösser oder gleich 32. Es bleibt also in jedem Fall die volle Spanne von 32 (64-32) zur Beurteilung des Schwellwerts übrig; bezogen auf die vier Korrelationsvorgänge des Decodierers heisst das, dass bei einer Chiplänge von N=8 sich Haupt- zu Nebenmaximum der Walsh-Sequenz nun wie 8 zu o verhalten, also das theoretische Maximum wie im synchronen Fall aufweisen.

Trifft beispielsweise das gespreizte Datensignal mit einer Zeitverzögerung (gegenüber dem synchronen Fall) um 3 Chiptakte am Decodierer ein, verschieben sich die Maxima der Korrelation in Spalte t8 von Tabelle 9 um drei Chiptakte.

Der Term ABS(a -b) in Gleichung (9) eliminiert bei der AKF die Nebenmaxima in den Fällen, in denen das mittige Hauptmaximum bei der Abfrage nicht getroffen wurde. Beim mittigen Hauptmaximum sind die Nebenmaxima symmetrisch, also verschwindet die Differenz (a - b).

Der Term ABS(a+b) verschwindet bei Kreuzkorrelationen, siehe Beispiele für W(3,2) / W(3,1), W(3,2) / W3,3) und W(3,2) / W(3,4) in Tabelle 10, während bei der Autokorrelation grosse, positive Beiträge zur Schwellwerterkennung durch den Term ABS(a+b) entstehen, siehe Beispiel W(3,2) / W(3,2) in Tabelle 10.

Die Bestimmung des Schwellwerts kann entfallen, wenn die Korrelationsfunktionen überhaupt kein Maximum aufweisen. Die beiden Vorzeichen der Modulation des Nutzbits + oder - müssen natürlich vor der Bildung des Absolutbetrags ermittelt und gespeichert werden.

Mit dem erfindungsgemäßen Verfahren erreicht man eine Mannigfaltigkeit von N-1 Walsh-Sequenzen zur Verwendung als orthogonale CDMA-Sequenzen; der um eins verminderte Wert stammt von W(1,1), die eine Konstante als Sequenz darstellt und mit der angegebenen Prozedur im asynchronen, aperiodischen Fall nicht verwendet werden kann (was nicht verwundert, da keine Information in Form von 180°-Phasensprüngen enthalten ist).

Für eine kontinuierliche, schnelle Datenübertragung müssen die Datensignale periodisch übertragen werden. Zur Eliminierung von Fremdsignalen nach der oben dargestellten aperiodischen Berechnung muss gemäß der Erfindung im empfangenden Decodierer der periodische Empfang in eine aperiodische Folge gewandelt werden. Dies gelingt mit dem Schaltungsschema nach Fig. 14, das im Folgenden beschrieben wird:

Nach der Übertragung (in Schritt 102 von Fig. 1) eines mit einer Walsh-Sequenz gespreizten Datensignals DS mit der Chiplänge N wird der digitale Datenstrom im Decodierer von einem getakteten Verzweiger 20 abwechselnd in Gruppen von jeweils N den beiden Schieberegistern 22 und 27 zugeführt. Der synchrone Taktimpuls (N mal Chiptakt t1) des Taktgebers 21 für das Takten des Verzweigers 20 kann aus einer Anfangssynchronisation des Decodierers gewonnen werden. Aus einem kontinuierlich eintreffenden Datenstrom mit einer 8-Chip-Sequenz erzeugt der Verzweiger 20 zwei Datenströme wie im folgenden Beispiel:

Ein kontinuierlich am Verzweiger 20 eintreffender, periodischer Datenstrom (bei dem also fortlaufend gespreizte Datensignale mit jeweils N Chips eintreffen)

1  1  1  1  -1  -1  -1  -1  1  1  1  1  -1  -1  -1  -1  1  1  1  1  -1  -1  -1  -1

wird aufgespalten im oberen Teil des Zweiges in einen Datenstrom für das Register 22

1  1  1  1  -1  -1  -1  -1    1  1  1  1  -1  -1  -1  -1

und im unteren Teil in einen Datenstrom für das Register 27

1  1  1  1  -1  -1  -1  -1

Hierbei ist angenommen, dass z.B. Guardintervalle im Datenstrom vorher eliminiert wurden.

Für die beiden Datenströme in den Schieberegistern 22 und 27 werden nun in den Korrelationsmodulen 23 und 28 bei jedem Chiptakt entsprechend den Schritten 103 bis 112 die Korrelationsfunktionen entsprechend der Gleichung (6) berechnet.

Die entstehende Bitfolge der Korrelationswerte aus der in Tabelle 9 dargestellten mittleren Spalte (t8) wird nun entsprechend dem Chiptakt (auf den der Synchrontaktgeber 24 eingestellt ist) an die Synchronabtaster 25, bzw. 29 gegeben. Die Abtaster 25 und 29 führen die entstandene Bitfolge den Entscheidungsmodulen 26 und 30 zu. Die Entscheidungsmodule entscheiden gemäß Gleichung (9), ob das jeweilige entspreizte Datensignal ein Nutzsignal-Bit ist oder ein Störsignal, das durch Laufzeitverschiebungen entstand oder ob es ein Fremdsignal darstellt. Die Entscheidungsmodule können als Hardware- oder Softwaremodule ausgebildet sein.

Das Ergebnis der Entscheidungsmodule 26 und 30 wird vom Synchronabtaster 31, der vom Taktgeber 21 mit der Taktfrequenz $t_i$ gesteuert wird, wieder zu einem kontinuierlichen Datenstrom der Nutzsignale zusammengesetzt.

Die Aufspaltung eines Datenstroms mit kontinuierlich, periodisch übertragenen Sequenzen aus N Chips in zwei Datenströme mit jeweils N Chips, die gegeneinander versetzt sind (um die Länge eines gespreizten Datensignals, bzw. entsprechend der zeitlichen Unterbrechungen von N*t1) ermöglicht die Berechnung der aperiodischen Korrelationsfunktionen; damit kann das erfindungsgemäße Verfahren Fremdsignale auch eliminieren, wenn die Übertragung kontinuierlich und periodisch ist.

Der periodisch eintreffende Strom gespreizter Datensignale kann auch in mehr als zwei Datenströme aufgespalten werden, für die jeweils parallel die Korrelationen berechnet werden. Möglich ist auch eine Zwischenpufferung der eintreffenden gespreizten Daten und entsprechend versetztes Auslesen zur aperiodischen Berechnung der Korrelationen.

Das erfindungsgemäße Verfahren bietet hierdurch die Möglichkeit für asynchrone Anwendungen des CDMA-Verfahrens, welche mit bisherigen Goldcodes nicht möglich sind.

Das erfindungsgemässe Verfahren ist hinsichtlich der Signalverarbeitung nicht aufwändig. Der entsprechende Decodierer kann in Hardware oder in Software realisiert werden. Die notwendigen Operationen beziehen sich im wesentlichen auf Schiebeoperation (AKF und KKF im Zeitbereich), Vorzeichenwechsel, Additionen und vereinzelte Multiplikationen. Diese Operationen können alle in INTEGER-Darstellung realisiert werden. Der Zusatzaufwand für das Verfahren ist im Vergleich zu den adaptiven Equalizern für die Kanalentzerrung gering. Ebenso ist der Aufwand verglichen mit dem Aufwand bei den Sprach-CODECs gering. Das erfindungsgemäße Verfahren vermindert damit nicht nur Störungen und Verluste in der Datenübertragung sondern verringert durch die geringeren Rechenzeiten auch die Latenz und Verzögerungen. Beides dient der Erhöhung der Bandbreite für die schnelle Datenübertragung.

Bezugszeichenliste

| | |
|---|---|
| 1 | Verzweiger |
| 2 | Schieberegister |
| 3 | Multiplikationsfilter |
| 4 und 5 | Schieberegister |
| 6 | Multiplikationsfilter |
| 7 | Schieberegister |
| 8 | Summationsfilter |
| KF1 | Korrelationsfilter 1 |
| KF2 | Korrelationsfilter 2 |
| KF3 | Korrelationsfilter 3 |
| KF4 | Korrelationsfilter 4 |
| 9 | Schieberegister |
| 10 | Multiplikationsfilter |
| 11 | Verzweiger |
| 12 | Schieberegister |
| 13 | Multiplikationsfilter |
| 14 und 15 | Schieberegister |
| 16 | Multiplikationsfilter |
| 17 | Schieberegister |
| 18 | Summationsfilter |
| KF5 | Korrelationsfilter 5 |
| KF6 | Korrelationsfilter 6 |
| KF7 | Korrelationsfilter 7 |
| KF8 | Korrelationsfilter 8 |
| 19 | Konjunktionsfilter |
| 20 | Verzweiger |
| 21 | Synchrontaktgeber N*t1 |
| 22 | Schieberegister |
| 23 | Korrelationsmodul |
| 24 | Synchrontaktgeber t1 |
| 25 | Abtaster |
| 26 | Entscheidungsmodul |
| 27 | Schieberegister |
| 28 | Korrelationsmodul |
| 29 | Abtaster |
| 30 | Entscheidungsmodul |
| 31 | Abtaster |
| 32 | Schieberegister |

**Patentansprüche**

1. Verfahren zum Entspreizen von mit einer Walsh-Sequenz (W(n,m)) der Chiplänge N gespreizten Datensignalen (DS), die als erster Datenstrom in einer periodischen Folge empfangen werden, wobei das Verfahren die Schritte enthält:

Aufspalten des ersten Datenstroms in mindestens einen zweiten (22) und einen dritten (27) aperiodischen Datenstrom, die jeweils alternativ N aufeinanderfolgende Chips des mit einem Chiptakt einlaufenden ersten Datenstroms aufnehmen;

bei jedem Chiptakt Berechnen der Korrelation je einer Chipsequenz der Länge N im zweiten und im dritten Datenstrom mit gespeicherten Sequenzen;

Bestimmen des Nutzsignals im zweiten und dritten Datenstrom durch Ermitteln der jeweiligen Maxima der berechneten Korrelationen innerhalb von 2N-1 Chiptakten und Bewerten der Symmetrie der ermittelten Maxima mit einem Schwellwert;

Zusammenführen der ermittelten Nutzsignale des zweiten und dritten Datenstroms alternativ nach jeweils N Chiptakten zur Erzeugung des entspreizten ersten Datenstroms.

2. Verfahren nach Anspruch 1, wobei der Schritt zur Bestimmung des Nutzsignals die Bedingung prüft:

$$(ABS(a + b) - ABS(a - b)) + ABS\ (Hauptmaximum) > 4^*N$$

und wobei bedeuten:

ABS = Absolutwert
Hauptmaximum = maximaler Wert der berechneten Korrelation innerhalb von 2N-1 Chiptakten
a = Summe aller Korrelationsmaxima innerhalb von N-1 Chiptakten, die dem Hauptmaximum vorangehen
b = Summe aller Korrelationsmaxima innerhalb von N-1 Chiptakten, die dem Hauptmaximum folgen

3. Verfahren nach Anspruch 1 oder 2, bei dem der Schritt der Berechnung der Korrelation die Schritte umfasst:

a) Bilden (103) eines zeitumgekehrten gespreizten Datensignals ($DS_{Rev}$) aus dem gespreizten Datensignal (DS);
b) Bilden (104) des komplementären gespreizten Datensignals (DS') aus dem gespreizten Datensignal (DS) durch abwechselnde Multiplikation der Chips des gespreizten Datensignals (DS) mit +1 und -1 und des zeitumgekehrten komplementären gespreizten Datensignals ($DS_{Rev}$') aus dem zeitumgekehrten Datensignal durch abwechselnde Multiplikation der Chips des zeitumgekehrten gespreizten Datensignals mit +1 und -1;
c) Korrelation (105) des gespreizten Datensignals (DS) mit der Walshsequenz (S), des zeitumgekehrten gespreizten Datensignals ($DS_{Rev}$) mit der zeitumgekehrten Walshsequenz ($S_{Rev}$), des komplementären gespreizten Datensignals (DS') mit der komplementären Walshsequenz (S') und des zeitumgekehrten komplementären gespreizten Datensignals ($DS_{Rev}$') mit der zeitumgekehrten komplementären Walshsequenz ($S_{Rev}$');
d) Summieren (106) der vier Korrelationen aus Schritt c);
e) Bilden (107) eines gewandelten gespreizten Datensignals (DAW) durch Multiplikation des gespreizten Datensignals (DS) mit einer Golay-Walsh-Sequenz (AW(n,1));
f) Bilden (108) des zeitumgekehrten gewandelten gespreizten Daten-signals (DAWRev);
g) Bilden (109) des komplementären gewandelten gespreizten Daten-signals (DAW') aus dem gespreizten gewandelten Datensignal (DAW) und des zeitumgekehrten komplementären gewandelten gespreizten Datensignals (DAWRev') aus dem zeitumgekehrten gewandelten gespreizten Datensignal (DAWRev) durch abwechselnde Multiplikation der Chipsequenz mit +1 und -1;
h) Korrelation (110) des gewandelten gespreizten Datensignals (DAW) mit einer Golay-Walsh-Sequenz (AW), des zeitumgekehrten gewandelten gespreizten Datensignals (DAWRev) mit der zeitumgekehrten Golay-Walsh-Sequenz (AWRev), des komplementären gewandelten gespreizten Datensignals (DAW') mit der komplementären Golay-Walsh-Sequenz (AW') und des zeitumgekehrten komplementären gewandelten gespreizten Datensignals (DAWRev') mit der zeitumgekehrten komplementären Golay-Walsh-Sequenz (AWRev');
i) Summieren (111) der vier Korrelationen aus Schritt h); und
j) Verknüpfen (112) der Summen aus Schritt d) und Schritt i) durch Konjunktion.

4. Decodierer zum Entspreizen von mit einer Walsh-Sequenz (W(n,m)) der Chiplänge N gespreizten Datensignalen (DS), die als erster Datenstrom in einer periodischen Folge empfangen werden, wobei der Decodierer die folgenden Mittel enthält:

Mittel (20, 21) Aufspalten des ersten Datenstroms in mindestens einen zweiten (22) und einen dritten (27) aperiodischen Datenstrom, die jeweils alternativ N aufeinanderfolgende Chips des mit einem Chiptakt einlaufenden ersten Datenstroms aufnehmen;
Mittel (23, 28) zum Berechnen der Korrelation je einer Chipsequenz der Länge N im zweiten und im dritten Datenstrom mit gespeicherten Sequenzen bei jedem Chiptakt;
Mittel (26, 30) zum Bestimmen des Nutzsignals im zweiten und dritten Datenstrom durch Ermitteln der jeweiligen Maxima der berechneten Korrelationen innerhalb von 2N-1 Chiptakten und Bewerten der Symmetrie der ermittelten Maxima mit einem Schwellwert;
Mittel (31) zum Zusammenführen der ermittelten Nutzsignale des zweiten und dritten Datenstroms alternativ nach jeweils N Chiptakten zur Erzeugung des entspreizten ersten Datenstroms (32).

5. Decodierer nach Anspruch 4, in dem die Mittel zur Berechnung der Korrelation enthalten:

Mittel (1) zur Verzweigung des gespreizten Datensignals (DS);
Mittel (2, 4, 5, 7) zum Speichern von mindestens zwei verzweigten gespreizten Datensignalen (DS);
Mittel (3, 6) zum Bilden und Speichern von komplementären gespreizten Datensignalen (DS') aus den gespreizten Datensignalen (DS);

Mittel zum Auslesen der gespeicherten gespreizten Datensignale (DS, DS'), wobei jeweils ein gespreiztes Datensignalen (DS) und ein komplementäres gespreiztes Datensignal (DS') als zeitumgekehrte gespreizte Datensignale (DSRev, DSRev') ausgelesen werden;

erste Korrelationsmittel ($KF_1$, $KF_2$, $KF_3$, $KF_4$) zur Korrelation (105) des gespreizten Datensignals (DS) mit der Spreizsequenz (S), des zeitumgekehrten gespreizten Datensignals (DSRev) mit der zeitumgekehrten Spreizsequenz (SRev), des komplementären gespreizten Datensignals (DS') mit der komplementären Spreizsequenz (S') und des zeitumgekehrten komplementären gespreizten Datensignals (DSRev') mit der zeitumgekehrten komplementären Spreizsequenz (SRev');

Mittel (8) zum Summieren der vier Korrelationen der ersten Korrelationsmittel;

Mittel (9, 10, 14) zum Bilden eines gewandelten gespreizten Datensignals (DAW) durch Multiplikation des gespreizten Datensignals (DS) mit einer Golay-Walsh-Sequenz (AW(n,1));

Mittel (11, 17) zum Bilden des zeitumgekehrten gewandelten gespreizten Datensignals (DAWRev);

Mittel (12, 13, 15, 16) zum Bilden des komplementären gewandelten gespreizten Daten-signals (DAW') aus dem gespreizten gewandelten Datensignal (DAW) und des zeitumgekehrten komplementären gewandelten gespreizten Datensignals (DAWRev') aus dem zeitumgekehrten gewandelten gespreizten Datensignal (DAWRev) durch abwechselnde Multiplikation der Chipsequenz mit +1 und -1;

zweite Korrelationsmittel ($KF_5$, KF6, KF7, KF8) zur Korrelation (110) des gewandelten gespreizten Datensignals (DAW) mit einer Golay-Walsh-Sequenz (AW), des zeitumgekehrten gewandelten gespreizten Datensignals (DAWRev) mit der zeitumgekehrten Golay-Walsh-Sequenz (AWRev), des komplementären gewandelten gespreizten Datensignals (DAW') mit der komplementären Golay-Walsh-Sequenz (AW') und des zeitumgekehrten komplementären gewandelten gespreizten Datensignals (DAWRev') mit der zeitumgekehrten komplementären Golay-Walsh-Sequenz (AWRev');

Mittel (18) zum Summieren der vier Korrelationen der zweiten Korrelationsmittel; und

Mittel (19) zum Verknüpften der Summe der ersten Korrelationsmittel und der Summe der zweiten Korrelationsmittel durch Konjunktion.

6. Decodierer nach einem der Ansprüche 4 bis 5, wobei die Mittel zum Aufspalten des ersten Datenstroms einen mit dem Chiptakt synchronisierten Taktgeber (20) und zwei nachgeschaltete, alternativ beaufschlagte Schieberegister (22, 27) der Länge N enthalten.

7. Decodierer nach einem der Ansprüche 4 bis 6, wobei die Mittel zur Bestimmung des Nutzsignals jeweils enthalten:

Speichermittel zum Speichern der für aufeinanderfolgende 2N-1 Chiptakte berechneten Korrelationswerte des zugeordneten Datenstroms; und

Vergleichsmittel die angepasst sind, das Verfahren nach Anspruch 2 durchzuführen.

8. Decodierer nach einem der Ansprüche 4 bis 7, wobei die Mittel zum Zusammenführen enthalten:

einen mit den Mitteln (26, 30) zum Bestimmen des Nutzsignals verbundenen Schalter (31), der mit dem N-fachen des Chiptaktes synchronisiert ist und

ein mit dem Schalter (31) verbundenes Schieberegister (32).

9. System zur digitalen Kommunikation mit Spreizmodulation, welches senderseitig einen Codierer zum Spreizen von Datensignalen mit Walsh-Sequenzen (S) und empfängerseitig einen Decodierer nach einem der Ansprüche 4 bis 8 umfasst.

## Claims

1. A method for de-spreading data signals (DS) that have been spread using a Walsh sequence (W(n, m)) of the chip length N, which are received as the first data stream in a periodic sequence, wherein the method comprises the steps of:

splitting the first data stream into at least a second (22) and a third (27) aperiodic data stream, each of which receives, in an alternating manner, N successive chips of the first data stream arriving with a chip cycle;

with each chip cycle, computing the correlation of the length N for each chip sequence in the second and in the third data streams with stored sequences;

determining the desired signal in the second and third data stream by calculating the respective maximums of the computed correlations within 2N -1 chip cycles, and evaluating the symmetry of the determined maximums with a threshold value;

joining the determined desired signals from the second and third data streams in an alternating manner, after each N chip cycles, for generating the de-spread first data stream.

2. The method according to claim 1, wherein the step for determining the desired signal checks the condition:

$$(ABS(a + b) - ABS(a - b)) + ABS \text{ (main maximum)} > 4^*N$$

and wherein:

ABS = absolute value
main maximum = maximum value of the calculated correlation within 2N - 1 chip cycles
a = sum of all correlation maximums within N - 1 chip cycles that precede the main maximum,
b = sum of all correlation maximums within N - 1 chip cycles that follow the main maximum.

3. The method according to claim 1 or 2, in which the step for computing the correlation comprises the steps of:

a) forming (103) a time-reversed spread data signal (DSRev) from the spread data signal (DS);
b) forming (104) the complementary spread data signal (DS') from the spread data signal (DS) through alternating multiplication of the chips of the spread data signal (DS) with +1 and -1, and of the time-reversed complementary spread data signal (DSRev') from the time-reversed data signal through alternating multiplication of the chips of the time-reversed spread data signal with +1 and -1;
c) correlating (105) the spread data signals (DS) with the Walsh sequence (S), the time-reversed spread data signals (DSRev) with the time-reversed Walsh sequence (SRev), the complementary spread data signal (DS') with the complementary Walsh sequence (S'), and the time-reversed complementary spread data signal (DSRev') with the time-reversed complementary Walsh sequence (SRev');
d) adding (106) the four correlations from step c);
e) forming (107) a converted spread data signal (DAW) through multiplication of the spread data signal (DS) with a Golay-Walsh sequence (AW(n,1));
f) forming (108) the time-reversed converted spread data signal (DAWRev);
g) forming (109) the complementary converted spread data signal (DAW') from the spread converted data signal (DAW), and the time-reversed complementary converted spread data signal (DAWRev') from the time reversed converted spread data signal (DAWRev), through alternating multiplication of the chip sequence with +1 and -1;
h) correlating (110) the converted spread data signal (DAW) with a Golay-Walsh sequence (AW), the time-reversed converted spread data signal (DAWRew) with the time-reversed Golay-Walsh sequence (AWRev), the complementary converted spread data signal (DAW') with the complementary Golay-Walsh sequence (AW'), and the time-reversed complementary converted spread data signal (DAWRev') with the time-reversed complementary Golay-Walsh sequence (AWRev');
i) adding (111) the four correlations from step h); and
j) linking (112) the sums from step d) and step i) through conjunction.

4. A decoder for de-spreading data signals (DS) that have been spread using a Walsh sequence (W(n, m)) of the chip length N, which are received as a first data stream in a periodic sequence, wherein the decoder comprises the following means:

means (20, 21) for splitting the first data stream into at least a second (22) and a third (27) aperiodic data stream, each of which receives, in an alternating manner, N successive chips of the first data stream arriving with a chip cycle;
means (23, 28) for computing the correlation for each chip sequence of the length N in the second and third data streams with stored sequences, at each chip cycle;
means (26, 30) for determining the desired signals in the second and third data streams by calculating the respective maximums of the computed correlations within 2N - -1 chip cycles, and evaluating the symmetry of the calculated maximums with a threshold value;
means (31) for joining the determined desired signals from the second and third data streams in an alternating manner, after each N chip cycles, for generating the de-spread first data stream.

5. The decoder according to claim 4, in which the means for computing the correlations comprise:

means (1) for branching the spread data signals (DS);
means (2, 4, 5, 7) for storing at least two branched spread data signals (DS);
means (3, 6) for forming and storing of complementary spread data signals (DS') from the spread data signals (DS);
means for reading the stored spread data signals (DS, DS'), wherein one spread data signal (DS) and one complementary spread data signal (DS), in each case, are read out as time-reversed spread data signals (DSRev, DSRev');
first correlation means (KF1, KF2, KF3, KF4) for correlating (105) the spread data signal (DS) with the spread sequence (S), the time-reversed spread data signal (DSRev) with the time-reversed spread sequence (SRev), the complementary spread data signal (DS') with the complementary spread sequence (S'), and the time-reversed complementary spread data signal (DSRev') with the time-reversed complementary spread sequence (SRev');
means (8) for adding the four correlations of the first correlation means;
means (9, 10 14) for forming a converted spread data signal (DAW) by multiplication of the spread data signal (DS) with a Golay-Walsh sequence (AW(n,1));
means (11, 17) for forming the time-reversed converted spread data signal (DAWRev);
means (12, 3, 15,16) for forming the complementary converted spread data signal (DAW') from the spread converted data signal (DAW), and the time-reversed complementary converted spread data signal (DAWRev') from the time-reversed converted spread data signal (DAWRev) through alternating multiplication of the chip sequence with +1 and -1;
second correlation means ($KF_5$, KF6, $KF_7$, KF8) for correlating (110) the converted spread data signal (DAW) with a Golay-Walsh sequence (AW), the time-reversed converted spread data signal (DAWRev) with the time reversed Golay-Walsh sequence (AWRev), the complementary converted spread data signal (DAW') with the complementary Golay-Walsh sequence (AW'), and the time-reversed complementary converted spread data signal (DAWRev') with the time-reversed complementary Golay-Walsh sequence (AWRev');
means (18) for adding the four correlations of the second correlation means; and
means (19) for linking the sum of the first correlation means and the sum of the second correlation means through conjunction.

6. The decoder according to one of the claims 4 to 5, wherein the means for splitting the first data stream comprise a clock (20) synchronized with the chip cycle, and two downstream shift registers (22, 27) of the length N which are activated in an alternating manner.

7. The decoder according to one of the claims 4 to 6, wherein the means for determining the desired signal each comprise:

storage means for storing the correlation values computed for successive 2N - 1 chip cycles of the data stream assigned thereto; and
comparison means adapted to execute the method according to claim 2.

8. The decoder according to one of the claims 4 to 7, wherein the means for joining comprise:

a switch (31) connected to the means (26, 30) for determining the desired signal, synchronized with the N multiples of the chip cycles, and
a shift register (32) connected to the switch (31).

9. A system for digital communication having spread modulation, which comprises a transmitter-side encoder for spreading data signals using Walsh sequences (S) and a receiver-side decoder according to one of the claims 4 to 8.

**Revendications**

1. Procédé pour désétaler des signaux de données (DS) étalés avec une séquence de Walsh (W(n,m)) de longueur de chip N, qui sont reçus en tant que premier flux de données dans une succession périodique, lequel procédé comprend les étapes suivantes :

division du premier flux de données en au moins un deuxième (22) et un troisième (27) flux de données apériodiques qui reçoivent chacun alternativement N chips successifs du premier flux de données arrivant à une cadence de chip ;

à chaque cadence de chip, calcul de la corrélation de chaque fois une séquence de chips de longueur N dans le deuxième et dans le troisième flux de données avec des séquences mémorisées ;

détermination du signal utile dans les deuxième et troisième flux de données par détermination du maximum respectif des corrélations calculées dans un intervalle de 2N-1 cadences de chip et évaluation de la symétrie des maxima déterminés avec une valeur seuil ;

réunion des signaux utiles déterminés des deuxième et troisième flux de données alternativement après chaque fois N cadences de chip pour générer le premier flux de données désétalé.

2. Procédé selon la revendication 1, dans lequel l'étape de détermination du signal utile vérifie la condition :

$$(\text{ABS}(a + b) - \text{ABS}(a - b)) + \text{ABS}(\text{maximum principal}) > 4^*\text{N}$$

dans laquelle :

ABS = valeur absolue

maximum principal = valeur maximum de la corrélation calculée dans un intervalle de 2N-1 cadences de chip

a = somme de tous les maxima de corrélation dans un intervalle de N-1 cadences de chip qui précèdent le maximum principal

b = somme de tous les maxima de corrélation dans un intervalle de N-1 cadences de chip qui suivent le maximum principal.

3. Procédé selon la revendication 1 ou 2, dans lequel l'étape de calcul de la corrélation comprend les étapes suivantes :

a) formation (103) d'un signal de données étalé inversé dans le temps ($DS_{Rev}$) à partir du signal de données étalé (DS) ;

b) formation (104) du signal de données étalé complémentaire (DS') à partir du signal de données étalé (DS) par multiplication alternée des chips du signal de données étalé (DS) par +1 et -1 et du signal de données étalé complémentaire inversé dans le temps ($DS_{Rev}$') à partir du signal de données étalé inversé dans le temps par multiplication alternée des chips du signal de données étalé inversé dans le temps par +1 et -1 ;

c) corrélation (105) du signal de données étalé (DS) avec la séquence de Walsh (S), du signal de données étalé inversé dans le temps ($DS_{Rev}$) avec la séquence de Walsh inversée dans le temps ($S_{Rev}$), du signal de données étalé complémentaire (DS') avec la séquence de Walsh complémentaire (S') et du signal de données étalé complémentaire inversé dans le temps ($DS_{Rev}$') avec la séquence de Walsh complémentaire inversée dans le temps ($S_{Rev}$') ;

d) sommation (106) des quatre corrélations obtenues à l'étape c) ;

e) formation (107) d'un signal de données étalé transformé (DAW) par multiplication du signal de données étalé (DS) par une séquence de Golay-Walsh (AW(n,1)) ;

f) formation (108) du signal de données étalé transformé inversé dans le temps (DAWRev) ;

g) formation (109) du signal de données étalé transformé complémentaire (DAW') à partir du signal de données étalé transformé (DAW) et du signal de données étalé transformé complémentaire inversé dans le temps (DAWRev') à partir du signal de données étalé transformé inversé dans le temps (DAWRev) par multiplication alternée de la séquence de chips par +1 et -1 ;

h) corrélation (110) du signal de données étalé transformé (DAW) avec une séquence de Golay-Walsh (AW), du signal de données étalé transformé inversé dans le temps (DAWRev) avec la séquence de Golay-Walsh inversée dans le temps (AWRev), du signal de données étalé transformé complémentaire (DAW') avec la séquence de Golay-Walsh complémentaire (AW') et du signal de données étalé transformé complémentaire inversé dans le temps (DAWRev') avec la séquence de Golay-Walsh complémentaire inversée dans le temps (AWRev') ;

i) sommation (111) des quatre corrélations obtenues à l'étape h) ; et

j) combinaison (112) des sommes obtenues à l'étape d) et à l'étape i) par conjonction.

4. Décodeur pour désétaler des signaux de données (DS) étalés avec une séquence de Walsh (W(n,m)) de longueur de chip N, qui sont reçus en tant que premier flux de données dans une succession périodique, lequel décodeur comprend les moyens suivants :

des moyens (20, 21) pour diviser le premier flux de données en au moins un deuxième (22) et un troisième (27) flux de données apériodiques qui reçoivent chacun alternativement N chips successifs du premier flux de données arrivant à une cadence de chip ;

des moyens (23, 28) pour calculer la corrélation de chaque fois une séquence de chips de longueur N dans le deuxième et dans le troisième flux de données avec des séquences mémorisées à chaque cadence de chip ;

des moyens (26, 30) pour déterminer le signal utile dans les deuxième et troisième flux de données par détermination du maximum respectif des corrélations calculées dans un intervalle de 2N-1 cadences de chip et évaluation de la symétrie des maxima déterminés avec une valeur seuil ;

des moyens (31) pour réunir les signaux utiles déterminés des deuxième et troisième flux de données alternativement après chaque fois N cadences de chip pour générer le premier flux de données désétalé (32).

5. Décodeur selon la revendication 4, dans lequel les moyens de calcul de la corrélation comprennent :

des moyens (1) pour ramifier le signal de données étalé (DS) ;

des moyens (2, 4, 5, 7) pour mémoriser au moins deux signaux de données étalés ramifiés (DS) ;

des moyens (3, 6) pour former et mémoriser des signaux de données étalés complémentaires (DS') à partir des signaux de données étalés (DS) ;

des moyens pour lire les signaux de données étalés mémorisés (DS, DS'), chaque fois un signal de données étalé (DS) et un signal de données étalé complémentaire (DS') étant lus en tant que signaux de données étalés inversés dans le temps (DSRev, DSRev') ;

des premiers moyens de corrélation (KF1, KF2, KF3, KF4) pour corréler (105) le signal de données étalé (DS) avec la séquence d'étalement (S), le signal de données étalé inversé dans le temps (DSRev) avec la séquence d'étalement inversée dans le temps (SRev), le signal de données étalé complémentaire (DS') avec la séquence d'étalement complémentaire (S') et le signal de données étalé complémentaire inversé dans le temps (DSRev') avec la séquence d'étalement complémentaire inversée dans le temps (SRev') ;

des moyens (8) pour sommer les quatre corrélations des premiers moyens de corrélation ;

des moyens (9, 10, 14) pour former un signal de données étalé transformé (DAW) par multiplication du signal de données étalé (DS) par une séquence de Golay-Walsh (AW(n,1)) ;

des moyens (11, 17) pour former le signal de données étalé transformé inversé dans le temps (DAWRev) ;

des moyens (12, 3, 5, 16) pour former le signal de données étalé transformé complémentaire (DAW') à partir du signal de données étalé transformé (DAW) et le signal de données étalé transformé complémentaire inversé dans le temps (DAWRev') à partir du signal de données étalé transformé inversé dans le temps (DAWRev) par multiplication alternée de la séquence de chips par +1 et -1 ;

des deuxièmes moyens de corrélation (KF5, KF6, KF7, KF8) pour la corrélation (110) du signal de données étalé transformé (DAW) avec une séquence de Golay-Walsh (AW), du signal de données étalé transformé inversé dans le temps (DAWRev) avec la séquence de Golay-Walsh inversée dans le temps (AWRev), du signal de données étalé transformé complémentaire (DAW') avec la séquence de Golay-Walsh complémentaire (AW') et du signal de données étalé transformé complémentaire inversé dans le temps (DAWRev') avec la séquence de Golay-Walsh complémentaire inversée dans le temps (AWRev') ;

des moyens (18) pour sommer les quatre corrélations des deuxièmes moyens de corrélation ; et

des moyens (19) pour combiner la somme des premiers moyens de corrélation et la somme des deuxièmes moyens de corrélation par conjonction.

6. Décodeur selon l'une des revendications 4 à 5, dans lequel les moyens pour diviser le premier flux de données comprennent un générateur d'impulsions (20) synchronisé avec la cadence de chip et deux registres à décalage (22, 27) de longueur N placés en aval, sollicités alternativement.

7. Décodeur selon l'une des revendications 4 à 6, dans lequel les moyens pour déterminer le signal utile comprennent chaque fois :

des moyens de mémorisation pour mémoriser les valeurs de corrélation calculées pour 2N-1 cadences de chip successives du flux de données associé ; et

des moyens de comparaison qui sont adaptés pour exécuter le procédé selon la revendication 2.

**8.** Décodeur selon l'une des revendications 4 à 7, dans lequel les moyens pour réunir comprennent :

un commutateur (31) relié aux moyens (26, 30) pour déterminer le signal utile et synchronisé avec N fois la cadence de chip et
un registre à décalage (32) relié au commutateur (31).

**9.** Système de communication numérique avec modulation d'étalement, lequel comprend, côté émetteur, un codeur pour étaler des signaux de données avec des séquences de Walsh (S) et, côté récepteur, un décodeur selon l'une des revendications 4 à 8.

| Senderseitige Spreizung eines Datensignals mit S(n,m) | 101 |

| Übertragung des gespreizten Datensignals DS | 102 |

| Empfängerseitige Bildung eines zeitumgekehrten gespreizten Datensignals $DS_{rev}$ | 103 |

| Bildung der komplementären gespreizten Datensignale DS' und $DS_{rev}'$ | 104 |

KF1  DS / S(n,m)

KF2  DS' / S(n,m)'

KF3  $DS_{rev}$ / $S(n,m)_{rev}$

KF4  $DS_{rev}'$ / $S(n,m)_{rev}'$   105

$\sum_1^4 KF_z$   106

Fig. 1

Fig. 2

Fig. 3

Fig. 4

| | Zeitachse (Verschiebung in Anzahl der Subpulse τ) | | | | | | | | | | | | | | |
|---|---|---|---|---|---|---|---|---|---|---|---|---|---|---|---|
| | $t_{15}$ | $t_{14}$ | $t_{13}$ | $t_{12}$ | $t_{11}$ | $t_{10}$ | $t_9$ | $t_8$ | $t_7$ | $t_6$ | $t_5$ | $t_4$ | $t_3$ | $t_2$ | $t_1$ |
| **Korrelationssummen** | | | | | | | | | | | | | | | |
| AW(3,1) / AW(3,1) | 0 | 0 | 0 | 0 | 0 | 0 | 0 | 32 | 0 | 0 | 0 | 0 | 0 | 0 | 0 |
| AW(3,1) / AW(3,3) | 0 | 0 | 0 | 0 | 0 | 0 | 0 | 0 | 0 | 0 | 0 | 0 | 0 | 0 | 0 |
| AW(3,1) / AW(3,5) | 0 | 0 | 0 | 0 | 0 | 0 | 0 | 0 | 0 | 0 | 0 | 0 | 0 | 0 | 0 |
| AW(3,1) / AW(3,7) | 0 | 0 | 0 | 0 | 0 | 16 | 0 | 0 | 0 | 16 | 0 | 0 | 0 | 0 | 0 |
| | | | | | | | | | | | | | | | |
| AW(3,3) / AW(3,1) | 0 | 0 | 0 | 0 | 0 | 0 | 0 | 0 | 0 | 0 | 0 | 0 | 0 | 0 | 0 |
| AW(3,3) / AW(3,3) | 0 | 0 | 0 | 0 | 0 | 0 | 0 | 32 | 0 | 0 | 0 | 0 | 0 | 0 | 0 |
| AW(3,3) / AW(3,5) | 0 | 0 | 0 | 0 | 0 | -16 | 0 | 0 | 0 | -16 | 0 | 0 | 0 | 0 | 0 |
| AW(3,3) / AW(3,7) | 0 | 0 | 0 | 0 | 0 | 0 | 0 | 0 | 0 | 0 | 0 | 0 | 0 | 0 | 0 |
| | | | | | | | | | | | | | | | |
| AW(3,5) / AW(3,1) | 0 | 0 | 0 | 0 | 0 | 0 | 0 | 0 | 0 | 0 | 0 | 0 | 0 | 0 | 0 |
| AW(3,5) / AW(3,3) | 0 | 0 | 0 | 0 | 0 | -16 | 0 | 0 | 0 | -16 | 0 | 0 | 0 | 0 | 0 |
| AW(3,5) / AW(3,5) | 0 | 0 | 0 | 0 | 0 | 0 | 0 | 32 | 0 | 0 | 0 | 0 | 0 | 0 | 0 |
| AW(3,5) / AW(3,7) | 0 | 0 | 0 | 0 | 0 | 0 | 0 | 0 | 0 | 0 | 0 | 0 | 0 | 0 | 0 |
| | | | | | | | | | | | | | | | |
| AW(3,7) / AW(3,1) | 0 | 0 | 0 | 0 | 0 | 16 | 0 | 0 | 0 | 16 | 0 | 0 | 0 | 0 | 0 |
| AW(3,7) / AW(3,3) | 0 | 0 | 0 | 0 | 0 | 0 | 0 | 0 | 0 | 0 | 0 | 0 | 0 | 0 | 0 |
| AW(3,7) / AW(3,5) | 0 | 0 | 0 | 0 | 0 | 0 | 0 | 0 | 0 | 0 | 0 | 0 | 0 | 0 | 0 |
| AW(3,7) / AW(3,7) | 0 | 0 | 0 | 0 | 0 | 0 | 0 | 32 | 0 | 0 | 0 | 0 | 0 | 0 | 0 |

Fig. 5

Fig. 6

Fig. 7

Fig. 8

Fig. 9

```
┌─────────────────────────┐
│  Senderseitige Spreizung │
│  eines Datensignals mit  │   101
│         W(n,m)           │
└─────────────────────────┘
            │
            ▼
┌─────────────────────────┐
│ Übertragung des gespreizten │   102
│     Datensignals DS      │
└─────────────────────────┘
            │
            ▼
┌─────────────────────────┐
│ Empfängerseitige Bildung │
│  eines zeitumgekehrten   │   103
│  gespreizten Datensignals │
│          DS_rev          │
└─────────────────────────┘
            │
            ▼
┌─────────────────────────┐
│ Bildung der komplementären │
│ gespreizten Datensignale DS' │   104
│       und DS_rev'        │
└─────────────────────────┘
            │
            ▼
┌─────────────────────────┐
│  KF1   DS / W(n,m)       │
│  KF2   DS' / W(n,m)'     │   105
│  KF3   DS_rev / W(n,m)_rev │
│  KF4   DS_rev' / W(n,m)_rev' │
└─────────────────────────┘
            │
            ▼
┌─────────────────────────┐
│      ₁Σ⁴ KF_z            │   106
└─────────────────────────┘
            │
            ▼
┌─────────────────────────┐
│ Bildung eines gewandelten │
│  gespreizten Datensignals │   107
│     DAW(n,m) durch       │
│      Multiplikation:     │
│  DS * AW(1,1) = DAW(n,m) │
└─────────────────────────┘
            │
            ▼
┌─────────────────────────┐
│ Bildung der zeitumgekehrten │
│   Golay-Walsh-Sequenz    │   108
│      DAW(n,m)_rev        │
└─────────────────────────┘
            │
            ▼
           (A)
```

KF1 $DS / W(n,m)$

KF2 $DS' / W(n,m)'$

KF3 $DS_{rev} / W(n,m)_{rev}$

KF4 $DS_{rev}' / W(n,m)_{rev}'$

$\sum_1^4 KF_z$

$DS * AW(1,1) = DAW(n,m)$

Fig. 10 A

(A)

| Bildung der komplementären gespreizten Datensignale DAW' und DAW$_{rev}$' | 109 |

| KF5  DAW / AW(n,m) <br> KF6  DAW' / AW(n,m)' <br> KF7  DAW$_{rev}$ / AW(n,m)$_{rev}$ <br> KF8  DAW$_{rev}$' / AW(n,m)$_{rev}$' | 110 |

| $_5\Sigma^8\ KF_z$ | 111 |

| $(_1\Sigma^4\ KF_z)\ \wedge\ (_5\Sigma^8\ KF_z)$ | 112 |

Fig. 10 B

Fig. 11 A

Fig. 11 B

Fig. 12A

Fig. 12B

Fig. 13

Fig. 14

**EP 2 689 535 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19717546 A1
- EP 1311095 B1
- EP 1726114 B1

- WO 2010108823 A

**In der Beschreibung aufgeführte Nicht-Patentliteratur**

- **J. G. PROAKIS ; M. SALEHI.** Grundlagen der Kommunikationstechnik. *Pearson Studium,* 2004, 793-797

- **D.E. SARWATE ; M.B. PURSLEY.** Crosscorrelation Properties of Pseudorandom Sequences and Related Sequences. *Proc. of the IEEE,* Mai 1980, vol. 68 (5), 593-619